# EUROPÄISCHE PATENTSCHRIFT

(11) **EP 4 225 575 B1**
(45) Veröffentlichungstag und Bekanntmachung des Hinweises auf die Patenterteilung: **12.06.2024**
(21) Anmeldenummer: 21840824.3
(22) Anmeldetag: 16.12.2021
(51) Int. Cl.: B32B 5/02, B32B 7/12, B32B 27/36, B32B 27/40

(54) **ALTERUNGSSTABILE DICHTBAHN**
AGING-RESISTANT SEALING MESH
FILET D'ÉTANCHÉITÉ RÉSISTANT AU VIEILLISSEMENT

(30) Priorität: 09.02.2021 DE 102021103033
(43) Veröffentlichungstag der Anmeldung: 16.08.2023
(73) Patentinhaber: EWALD DÖRKEN AG, 58313 Herdecke (DE)
(72) Erfinder: BACHON, Thomas, 40597 Düsseldorf (DE); FLAIG, Ronald, 51373 Leverkusen (DE); HARFMANN, Carsten, 60323 Frankfurt (DE); LAUR, Rüdiger, 44225 Dortmund (DE); WEEKE, Yvonne, 45276 Essen (DE)
(74) Vertreter: Freiherr von Foullon, Alexander
(86) Internationale Anmeldenummer: PCT/EP2021/086218
(87) Internationale Veröffentlichungsnummer: WO 2022/171338

(56) Entgegenhaltungen:
- EP-A1- 2 065 534
- EP-A1- 3 002 382
- EP-A1- 3 127 693
- WO-A1-2019/115677
- WO-A1-2020/088851
- WO-A1-2020/088852
- WO-A1-2020/088853
- WO-A1-2020/187540
- WO-A1-2021/009272
- DE-A1- 19 904 423
- DE-A1-102015 000 092
- US-A1- 2009 170 392

## Beschreibung

Die vorliegende Erfindung betrifft das technische Gebiet der Baumaterialien.

Insbesondere betrifft die Erfindung eine hochalterungsstabile flächige Bahn für den Baubereich.

Weiterhin betrifft die vorliegende Erfindung die Verwendung einer hochalterungsstabilen flächigen Bahn im Baubereich, insbesondere als Unterspannbahn, Unterdeckbahn und/oder Schalungsbahn in einer Dachkonstruktion und/oder Fassadenbahn in einer Wandkonstruktion.

Darüber hinaus betrifft die vorliegende Erfindung ein Verfahren zur Herstellung von hochalterungsstabilen flächigen Bahnen für den Baubereich.

Flächige Bahnen, wie beispielsweise Abdeck-, Fassaden- oder auch Unterdachbahnen, die insbesondere im Baubereich bzw. im Bereich der Bauwirtschaft eingesetzt werden, dienen üblicherweise dem Schutz von Gebäuden, Baumaterialien und/oder zur Abdeckung, insbesondere von Gebäuden. Darüber hinaus können derartige Bahnen auch in weiteren Bereichen, beispielsweise in der Landwirtschaft, als Geotextil und/oder im Bereich der Verpackungsindustrie, eingesetzt werden.

Im Allgemeinen dienen die in Rede stehenden Bahnen dabei dem Werterhalt von Gütern, insbesondere Gebäuden und/oder Baumaterialien. Beispielsweise kann die Bahn zum Schutz vor der Witterung, insbesondere zum Schutz vor Regen, Schnee, Feuchtigkeit, Kälte, Wärme und/oder Wind, eingesetzt werden. Folglich können in Rede stehende Bahnen auch als Schutzbahnen bzw. -folien aufgefasst werden.

Eine wichtige Eigenschaft der in Rede stehenden Bahnen ist ihre Beständigkeit gegenüber äußeren Umwelteinflüssen, insbesondere in Form von Witterungseinflüssen, wie zuvor aufgezählt. Bahnen, deren Beständigkeit gegenüber diesen Einflüssen nur unzureichend ausgebildet ist, weisen in der Regel eine vergleichsweise kurze Lebensdauer bzw. geringe Dauerhaftigkeit und Alterungsstabilität auf. Eine geringe Dauerhaftigkeit bzw. Alterungsstabilität kann sich letztlich in Form von Materialveränderungen, die etwa Ermüdungserscheinungen gleichen, ausdrücken, so dass entsprechende Bahnen spröde, porös, rissig und/oder insbesondere undicht werden, bspw. gegenüber einem Eindringen von Feuchtigkeit bzw. Wasser.

Speziell im Hinblick auf Bahnen, die für die Anwendung an, in oder auf Gebäuden und Dächern vorgesehen sind, ist es jedoch nicht akzeptabel, wenn diese unerwartet bzw. vorzeitig altern und in der Folge ausfallen, bspw. bereits nach wenigen Jahren. Dringt dadurch bedingt Feuchtigkeit in das Dach oder Gebäude ein, so ist der Zeitraum bis zur Erkennung des Schadens üblicherweise sehr lang. Die eindringende Feuchtigkeit kann so Schäden verursachen, die in der Regel erst dann bemerkt werden, wenn das Schadensbild, insbesondere im Inneren des Gebäudes, sichtbar wird, beispielsweise in Form von Wasserflecken an den Gebäudewänden. Ein derartiger Wasserfleck als Anlass zur Reparatur lässt dann häufig erkennen, dass weit mehr Bereiche des Gebäudes geschädigt sind als nur die den Wasserfleck aufweisende Wand. Zur Schadensbehebung muss aufwendig die Gebäudehülle zumindest bereichsweise freigelegt werden, um die Schadstelle zu finden, was üblicherweise mit sehr hohem Aufwand und damit einhergehend auch mit sehr hohen Kosten verbunden ist. Dementsprechend ist es für in Rede stehende Bahnen von zentraler Bedeutung bzw. insbesondere wünschenswert, dass die verwendeten Bahnen zuverlässig und einwandfrei Dauerhaftigkeiten in einem Bereich von mehreren Jahren und vorzugsweise Jahrzenten aufweisen.

Die Dauerhaftigkeit von Bahnen, insbesondere für den Baubereich, wird üblicherweise in Übereinstimmung mit der Norm DIN EN 13859-1-2010-11 bestimmt. Im Rahmen dieser normativen Dauerhaftigkeitsprüfung erfolgt zunächst eine Alterungssimulation, wobei die betreffende Bahn UV-Strahlung ausgesetzt wird, wodurch die Dauer bis zum Einbau bzw. zur Eindeckung der Bahn im Gebäude bzw. Dach nachgestellt sein soll. Hierzu wird die Bahn über 336 Stunden mit UV-Licht mit einer Energie pro Flächeneinheit vom 55 MJ/m² bestrahlt. Darüber hinaus erfolgt zur Abschätzung der Langzeitstabilität der Bahn eine Warmeinlagerung bei 70 °C über einen Zeitraum von 90 Tagen. Die Warmeinlagerung soll dabei gemäß der genannten Norm gerade in Gegenwart eines möglichst geringen Luftstroms vorgenommen werden, um so eine Beeinträchtigung von Leistungsmerkmalen des zu prüfenden Produktes zu vermeiden. Bahnen, die nach diesen beiden Verfahren zur Alterungssimulation noch intakt, d.h. im Wesentlichen wasserdicht sind, sollen eine hohe Alterungsbeständigkeit aufweisen.

In der Praxis hat sich jedoch gezeigt, dass eine Reihe von Bahnen, welche die vorgenannte Prüfprozedur ohne Beanstandungen überstanden haben, ungeachtet der Testergebnisse, vorzeitig ausfallen und über eine wesentlich geringere Dauerhaftigkeit als simuliert bzw. attestiert verfügen. Dies zeigt sich insbesondere im Zusammenhang mit Anwendungen, bei denen die entsprechenden Bahnen vermehrt starken Luftbewegungen ausgesetzt sind.

Die WO 2020/08853 A1 etwa betrifft eine Verbundfolie, vorzugsweise vorgesehen für den Einsatz in der Bauwirtschaft und/oder vorzugsweise zur Verwendung als Baufolie, mit wenigstens einer Funktionsschicht, wenigstens einer äußeren Schutzschicht und wenigstens einer inneren Schutzschicht, wobei die Funktionsschicht zwischen der äußeren Schutzschicht und der inneren Schutzschicht angeordnet ist. Es ist vorgesehen, dass die Funktionsschicht als wenigstens einlagige Membranschicht ausgebildet ist, dass die äußere Schutzschicht als eine Polyolefin aufweisende Vliesschicht und die innere Schutzschicht als eine Polyester aufweisende Vliesschicht ausgebildet ist.

Weiterhin betrifft die WO 2020/088851 A1 eine Verbundfolie, vorzugsweise vorgesehen für den Einsatz in der Bauwirtschaft und/oder vorzugsweise zur Verwendung als Baufolie, mit wenigstens einer Funktionsschicht, wenigstens einer äußeren Schutzschicht und wenigstens einer inneren Schutzschicht, wobei die Funktionsschicht zwischen der äußeren Schutzschicht und der inneren Schutzschicht angeordnet ist. Es ist vorgesehen, dass die Funktionsschicht als wenigstens einlagige Membranschicht ausgebildet ist, dass die äußere Schutzschicht und die innere Schutzschicht als eine Polyolefin aufweisende Vliesschicht ausgebildet sind und dass die äußere Schutzschicht und/oder die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Die WO 2020/088852 A1 betrifft außerdem eine Verbundfolie, vorzugsweise vorgesehen für den Einsatz in der Bauwirtschaft und/oder vorzugsweise zur Verwendung als Baufolie, mit wenigstens einer Funktionsschicht, wenigstens einer äußeren Schutzschicht und wenigstens einer inneren Schutzschicht, wobei die Funktionsschicht zwischen der äußeren Schutzschicht und der inneren Schutzschicht angeordnet ist. Es ist vorgesehen, dass die Funktionsschicht als wenigstens einlagige Membran ausgebildet ist, dass die äußere Schutzschicht und die innere Schutzschicht als eine Polyethylenterephthalat (PET) aufweisende Vliesschicht ausgebildet ist und dass die äußere Schutzschicht und/der die innere Schutzschicht wenigstens eine Bikomponentenfaser mit einer ersten Komponente und einer zweiten Komponente aufweist, wobei die erste Komponente ein erstes Polymer und die zweite Komponente ein zweites Polymer als Bestandteil aufweist.

Darüber hinaus betrifft etwa die WO 2021/009272 A1 ein Spinnvlies, bestehend aus wenigstens einer Bikomponentenfaser, sowie eine Verbundfolie, welche das Spinnvlies aufweist, geeignet zum Einsatz im Bereich der Bauwirtschaft, insbesondere zum Schutz von Gebäuden, Baumaterialien und/oder zur Abdeckung, insbesondere von Gebäuden, vorzugsweise als Fassadenbahnen, Baufolien und/oder Dachbahnen.

Die DE 10 2015 000 092 A1 betrifft eine Unterdachbahn mit einer im verlegten Zustand nach außen gewandten Bewitterungsseite und einer im verlegten Zustand nach innen gewandten Innenseite, mit mindestens einer wasserdampfdurchlässigen Trägerschicht und mindestens einer mit der Trägerschicht verbundenen, wasserundurchlässigen, wasserdampfdurchlässigen Funktionsschicht. Es ist vorgesehen, dass als außenliegende Schicht auf der Bewitterungsseite und/oder auf der Innenseite eine Schutzschicht zum Schutz der weiteren Schicht der Unterdachbahn vor UV-Strahlung vorgesehen ist.

Schließlich betrifft die EP 3 002 382 A1 eine Unterdachbahn mit einer im verlegten Zustand nach außen gewandten Bewitterungsseite und einer im verlegten Zustand nach innen gewandten Innenseite, mit mindestens einer wasserdampfdurchlässigen Trägerschicht und mindestens einer mit der Trägerschicht verbundenen, wasserundurchlässigen, wasserdampfdurchlässigen Funktionsschicht. Es ist vorgesehen, dass als außenliegende Schicht auf der Bewitterungsseite und/oder auf der Innenseite eine Schutzschicht zum Schutz der weiteren Schichten der Unterdachbahn vor UV-Strahlung vorgesehen ist.

Im Rahmen einiger Anwendungen, bspw. in Dachkonstruktionen als Unterspann- bzw. Unterdeckbahn, ist es jedoch gerade gewünscht bzw. erforderlich, dass intensive Luftbewegungen, bspw. zum Austreiben von Feuchtigkeit aus der Dachkonstruktion, möglich sind und, dass die in diesem Zusammenhang eingesetzten Bahnen den Anwendungsbedingungen insbesondere über einen langen, d.h. mehrjährigen, Zeitraum dennoch möglichst unbeschadet und ohne Performanceeinbußen standhalten.

Das vorzeitige Ausfallen von entsprechenden Bahnen ist dementsprechend problematisch, da zunächst einerseits, insbesondere rechtzeitig, erkannt werden müsste, dass eine verbaute Bahn vorzeitig überaltert und somit nicht weiter einwandfrei funktionsfähig ist, und andererseits ein unerwarteter und kostenintensiver Austausch der Bahn vorzunehmen wäre, um etwaigen Schäden an Dach und/oder Gebäude vorzubeugen. Wie jedoch zuvor ausgeführt wurde, potenziert sich die Problemlage in der Regel häufig um ein Vielfaches, da ein derartiger Materialmangel oft solange unerkannt bleibt, bis sichtbare und somit bereits größere Schäden am Gebäude entstanden sind, die dann umso aufwendiger in Hinblick auf Zeit, Arbeit und Kosten zu beheben sind.

Vor diesem Hintergrund ergibt sich weiterhin ein Bedarf nach alterungsstabilen Bahnen, insbesondere für die Verwendung im Baubereich, die tatsächlich bzw. verlässlich längerfristig und somit hochalterungsbeständig sind.

Gleichfalls ergibt sich außerdem ein Bedarf nach einem zuverlässigen Verfahren zur Überprüfung der Dauerhaftigkeit bzw. Alterungsbeständigkeit der betreffenden Bahnen, welches insbesondere sicherstellt, dass Bahnen, die in der Simulation eine hohe Alterungsbeständigkeit aufweisen, diese auch tatsächlich besitzen.

Es ist somit eine Aufgabe der vorliegenden Erfindung, die zuvor geschilderten mit dem Stand der Technik verknüpften Probleme und Nachteile zu überwinden, diese zumindest jedoch abzuschwächen.

Insbesondere ist eine Aufgabe der vorliegenden Erfindung darin zu sehen, eine flächige Bahn bereitzustellen, welche sich durch im Vergleich zu Bahnen bzw. Folien aus dem Stand der Technik überlegene Alterungseigenschaften bzw. Dauerhaftigkeiten auszeichnet.

Darüber hinaus ist eine weitere Aufgabe der vorliegenden Erfindung darin zu sehen, ein Verfahren bereitzustellen, welches eine zuverlässigere und präzisere Bestimmung bzw. Überprüfung der Alterungsstabilität von flächigen Bahnen, insbesondere für den Baubereich, ermöglicht.

Gegenstand der vorliegenden Erfindung gemäß einem ersten Aspekt der vorliegenden Erfindung ist eine hochalterungsstabile flächige Bahn für den Baubereich gemäß Anspruch 1; weitere vorteilhafte Ausgestaltungen dieses Erfindungsaspektes sind Gegenstand der diesbezüglichen Unteransprüche. Weiterer Gegenstand der vorliegenden Erfindung gemäß einem zweiten Aspekt der vorliegenden Erfindung ist die Verwendung einer hochalterungsstabilen flächigen Bahn im Baubereich nach Anspruch 11.

Weiterer Gegenstand der vorliegenden Erfindung gemäß einem dritten Aspekt der vorliegenden Erfindung ist ein Verfahren zur Herstellung einer hochalterungsstabilen flächigen Bahn für den Baubereich nach Anspruch 12.

Es versteht sich von selbst, dass im Folgenden genannte, besondere Ausgestaltungen, insbesondere besondere Ausführungsformen oder dergleichen, welche nur im Zusammenhang mit einem Erfindungsaspekt beschrieben sind, auch in Bezug auf die anderen Erfindungsaspekte gelten, ohne dass dies einer ausdrücklichen Erwähnung bedarf.

Weiterhin ist bei allen nachstehend genannten relativen bzw. prozentualen, insbesondere gewichtsbezogenen Mengenangaben zu beachten, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.% resultieren. Dies versteht sich für den Fachmann aber von selbst.

Zudem gilt, dass alle im Folgenden genannten Parameterangaben oder dergleichen grundsätzlich mit genormten oder explizit angegebenem Bestimmungsverfahren oder aber für den Fachmann an sich geläufigen Bestimmungsmethoden bestimmt bzw. ermittelt werden können.

Dies vorausgeschickt, wird nachfolgend der Gegenstand der vorliegenden Erfindung näher erläutert.

Gegenstand der vorliegenden Erfindung - gemäß einem **ersten** Aspekt der vorliegenden Erfindung - ist somit eine hochalterungsstabile flächige Bahn für den Baubereich, aufweisend einen mehrschichtigen Aufbau umfassend mindestens eine erste Vliesschicht und eine zweite Vliesschicht sowie mindestens eine zwischen den Vliesschichten angeordnete Membranschicht, wobei die Membranschicht als monolithische Membranschicht ausgebildet ist und ein thermoplastisches Elastomer ausgewählt aus der Gruppe von thermoplastischen Polyurethanen und/oder thermoplastischen Copolyestern (TPEE) aufweist oder hieraus besteht und wobei die erste und/oder die zweite Vliesschicht ein Flächengewicht zwischen 10 und 150 g/m² aufweist, wobei die erste Vliesschicht und die zweite Vliesschicht als Monokomponentenfaservlies ausgebildet sind, wobei zwischen der ersten Vliesschicht und der Membranschicht und der zweiten Vliesschicht und der Membranschicht eine Haftvermittlerschicht angeordnet ist, wobei die Haftvermittlerschicht durch einen reaktiven Polyurethan-Hotmelt-Klebstoff gebildet wird und mit einem Flächengewicht von 2 bis 20 g/m² aufgebracht ist, und wobei die Bahn eine Alterungsstabilität von mindestens 15 Jahren aufweist, wobei die Alterungsstabilität bestimmt ist, indem die Bahn einem künstlichen Alterungsprozess unterzogen wird, wobei der künstliche Alterungsprozess bei einer Temperatur von 70±2 °C und einer Luftgeschwindigkeit von 5±2 m/s durchgeführt wird, wobei die Zeitdauer in Wochen für die Durchführung des künstlichen Alterungsprozesses bestimmt ist, indem die Anzahl von Jahren für die Alterungsstabilität mit dem Faktor 12 multipliziert und das erhaltene Produkt durch einen Wert von 4,5 geteilt wird, oder indem die Anzahl von Jahren für die Alterungsstabilität mit dem Faktor 2,5 multipliziert wird, und wobei im Anschluss an den künstlichen Alterungsprozess die Wasserdichtigkeit der Bahn nach DIN EN 13859-1-2010-11, Abschnitt 5.2.3, gegenüber einer Wassersäule von wenigstens 200 mm über einen Zeitraum von 2 h geprüft wird.

Denn, wie die Anmelderin überraschenderweise herausgefunden hat, zeichnen sich flächige Bahnen mit den erfindungsgemäß vorgesehenen Merkmalen bzw. Eigenschaften durch eine besonders hohe Alterungsstabilität aus, welche belastbar und zuverlässig mittels eines künstlichen Alterungsprozesses mit anschließender Wasserdichtigkeitsprüfung bestätigt ist. Insbesondere die für erfindungsgemäße Bahnen vorgesehenen Vliesschichten weisen eine besondere Resistenz und Beständigkeit gegenüber umwelt- bzw. insbesondere witterungsbedingten Einflüssen auf. So kann dann in vorteilhafter Weise auch die Membranschicht, die zwischen der ersten und der zweiten Vliesschicht angeordnet und vorzugsweise maßgeblich für die funktionellen Eigenschaften der Bahn ist, für einen langen Zeitraum, insbesondere von mehreren Jahren bzw. vorzugsweise Jahrzehnten, zuverlässig erhalten werden.

In diesem Sinne lässt sich die hohe Alterungsstabilität erfindungsgemäßer Bahnen insbesondere zumindest im Wesentlichen auf den vorteilhaften Aufbau der Bahnen zurückführen. Die erfindungsgemäße Bahn weist insbesondere auf Basis der vorgesehenen Vliesschichten die erfindungsgemäß angestrebten bzw. vorgesehenen hohen Alterungsstabilitäten auf, wobei die lange Lebensdauer bzw. hohe Alterungsstabilität der erfindungsgemäßen Bahn speziell mittels der vorgenommenen Alterungssimulation bestimmt bzw. bestätigt wird.

Der vorliegenden Erfindung liegt dabei die überraschende Erkenntnis der Anmelderin zugrunde, dass die Alterungsstabilität bzw. Dauerhaftigkeit von in Rede stehenden Bahnen insbesondere anwendungsbezogener sowie -spezifischer, zuverlässiger und auch präziser bestimmt werden können, als bisher bekannt bzw. durchgeführt, wenn neben dem Aspekt einer erhöhten Temperatur insbesondere auch der Einfluss der Luftbewegung auf der Oberfläche der flächigen Bahn in der künstlichen Alterssimulation berücksichtigt wird.

Maßgeblich ist dabei insbesondere die Geschwindigkeit, mit welcher die Luftbewegung auf der Bahnoberfläche erfolgt. Dieser Aspekt ist in dem bisherigen normativen Alterungsprozess gemäß DIN EN 13859-1-2010-11 nicht ausreichend berücksichtigt, so dass auf Grundlage dieser DIN-Norm bzw. der demgemäß vorgesehenen normativen Alterungssimulation entsprechend teils unzureichende Erkenntnisse bzw. Ergebnisse in Bezug auf die Alterungsstabilität von Bahnen bzw. Folien für den Baubereich erhalten werden.

Es hat sich insbesondere herausgestellt, dass Bahnen bzw. Bau- oder Schutzfolien, welche die Norm DIN EN 13859-1-2010-11 erfüllen, üblicherweise unter den erfindungsgemäß vorgesehenen künstlichen Alterungsbedingungen vorzeitig ermüden bzw. vorzeitig altern und in der Folge ausfallen. Konsequenterweise wird für diese Bahnen bzw. Folien auch in der Praxis bzw. im Anwendungsfall beobachtet, dass die Dauerhaftigkeit und Langzeitbeständigkeit der Bahnen wesentlich geringer ausgeprägt ist, als es im Hinblick auf die bestandene DIN-Prüfung zu erwarten gewesen wäre. Dies bedeutet also zum einen, dass die Beständigkeit bzw. Dauerhaftigkeit oder Alterungsstabilität von entsprechenden Bahnen nicht ausreichend gegeben ist, und zum anderen, dass die Alterungssimulation im Rahmen der Norm DIN EN 13859-1-2010-11 nicht so ausgereift ist, dass für die erhaltenen Ergebnisse zuverlässige und wirksame Rückschlüsse auf deren Eigenschaften gezogen werden können.

Demgegenüber stellt die vorliegende Erfindung sowohl ein vorteilhaftes Verfahren zur Bestimmung bzw. Überprüfung der Dauerhaftigkeit bzw. Alterungsstabilität von flächigen Bahnen für den Baubereich als auch ein entsprechendes Erzeugnis mit demnach verbesserten Eigenschaften gegenüber herkömmlichen Bahnen des Standes der Technik zur Verfügung. Die erfindungsgemäßen Bahnen zeichnen sich insbesondere durch vorteilhafte Alterungsstabilitäten aus und können in diesem Sinne als hochalterungsstabil bezeichnet werden, wie mittels des vorgenommenen Alterungsprozesses und der nachfolgenden, insbesondere erfolgreich durchgeführten bzw. bestandenen, Wasserdichtigkeitsprüfung bestätigt ist. Die Wasserdichtigkeit von Bahnen, wie sie die vorliegende Erfindung bereitstellt, kann als eine der entscheidendsten Eigenschaften der Bahnen aufgefasst werden, welche insbesondere auch nach einem mehrjährigen Zeitraum der Anwendung, bspw. als Unterdach- oder auch Fassadenbahn, noch weitestgehend erhalten sein sollte.

Neben einer hohen Alterungsstabilität weisen erfindungsgemäße Bahnen auch eine sehr gute Hydrolysestabilität bzw. -beständigkeit auf. Die Hydrolysestabilität erfindungsgemäßer Bahnen kann dabei durch Lagerung der Bahnen bei 70 °C und 90 % rel. Luftfeuchte in einem Klimaofen, insbesondere über einen Zeitraum von 12 Wochen, vorzugsweise 24 Wochen, und anschließende Überprüfung der Wasserdichtigkeit der Folien bestimmt bzw. bestätigt werden. Weiter bevorzugt halten erfindungsgemäße Bahnen hierbei u.a. einer dynamischen Wassersäule von mehr als 3 m, insbesondere mehr als 5 m, Stand.

Nicht zuletzt zeichnen sich die erfindungsgemäßen Bahnen auch durch eine sehr gute Stabilität bei Feuchtigkeit und niedrigen Außentemperaturen aus. Diese besondere Witterungsstabilität ist sowohl wichtig als auch ein maßgeblicher Vorteil erfindungsgemäßer Bahnen, da Bahnen, wie sie die vorliegende Erfindung vorschlägt, während der Einbauphase im Winter Regen, Schneeregen oder schmelzendem Schnee ausgesetzt sein können. Zur Überprüfung der Witterungsstabilität werden die Bahnen über die Winter-Witterungsperiode hinweg im Freien uneingedeckt und auf Sparren gelagert, und wird im Anschluss an die Lagerungsperiode die Wasserdichtigkeit und Verbundhaftung der Bahn bestimmt.

Es wird mit der vorliegenden Erfindung somit also ein Erzeugnis bereitgestellt, das in vorteilhafter Weise die Sicherheit und Verlässlichkeit in Bezug auf die Beständigkeit und Dauerhaftigkeit von Dach- bzw. Fassadenkonstruktionen erhöht. Indem das erfindungsgemäße Erzeugnis eine Alterungsstabilität von mindestens 15 Jahren aufweist, was belastbar festgestellt bzw. bestätigt ist, kann sicher davon ausgegangen werden, dass die betreffende Bahn sowohl unter herkömmlichen bzw. regionaltypischen als auch harscheren oder extremeren Witterungsbedingungen nicht vorzeitig ausfällt bzw. vorschnell altert.

Die im Rahmen der vorliegenden Erfindung für die erfindungsgemäßen Bahnen vorgesehene sowie sichergestellte und verlässlich überprüfte hohe Alterungsbeständigkeit kann dabei - ohne sich auf diese Theorie festlegen zu wollen - auf Beobachtungen der Anmelderin zurückgeführt werden, wonach erfindungsgemäße Bahnen in deutlich geringerem Maße anfällig für Oxidationsprozess sind, welche infolge der Einwirkung von Luftsauerstoff und teils UV-Strahlung eintreten können. Vor allem zeigen die erfindungsgemäßen Bahnen eine erhöhte Resistenz gegenüber Oxidationsprozessen speziell unter Bedingungen, im Rahmen derer ein hohes Maß an Luftbewegung sowie erhöhte Luftgeschwindigkeiten auf der Bahnoberfläche vorliegen.

Demgegenüber hat sich für im Hinblick auf den Aufbau vergleichbare bekannte Bahnen des Standes der Technik, d.h. insbesondere Bahnen mit einem Vlies-Membran-Vlies-Aufbau, gezeigt, dass diese im Rahmen der Alterungssimulation zwar gegenüber erhöhten Temperaturen stabil sind, nicht jedoch solchen Bedingungen Stand halten können, unter denen die Bahnen hohen Temperaturen und intensiver Luftbewegung zugleich ausgesetzt sind. Die vorschnelle Alterung der bekannten Bahnen konnte hierbei eindeutig auf eine übermäßige, insbesondere oberflächliche, Oxidation von Bestandteilen der Bahnen zurückgeführt werden, wodurch letztlich die strukturelle Integrität der Bahnen aufgelöst und die Bahnen rissig, porös, spröde sowie undicht gegenüber Wasser und damit unbrauchbar wurden.

Diese negativen, witterungsbedingt induzierten Effekte können mit der erfindungsgemäßen Bahn deutlich abgeschwächt werden, insbesondere über einen verlässlich bestimmbaren sowie entsprechend nachweislich gewährleisteten Zeitraum von mindestens 15 Jahren.

Dabei hat es sich im Rahmen der vorliegenden Erfindung bewährt, wenn die flächige Bahn ausgebildet ist als Unterspannbahn, Unterdeckbahn und/oder Schalungsbahn in einer Dachkonstruktion und/oder Fassadenbahn in einer Wandkonstruktion.

Es ist im Rahmen der vorliegenden Erfindung bevorzugt vorgesehen, dass die Bahn eine Alterungsstabilität von mindestens 20 Jahren, insbesondere mindestens 25 Jahren, aufweist. Noch weiter bevorzugt kann es sogar sein, dass die Bahn eine Alterungsstabilität in einem Bereich von 15 bis 75 Jahren, insbesondere 20 bis 60 Jahren, vorzugsweise 25 bis 50 Jahren, aufweist. Die mit der vorliegenden Erfindung bereitgestellten Bahnen können also als hochalterungsbeständig bzw. -stabil und dauerhaft bezeichnet werden. Die vorliegende Erfindung leistet mit den erfindungsgemäßen Bahnen daher auch einen besonders wertvollen und vorteilhaften Beitrag zur Steigerung sowohl der Effizienz als auch der Sicherheit im Baubereich.

Zur Bestimmung bzw. Bestätigung der erfindungsgemäß angestrebten hohen Alterungsstabilität ist es im Rahmen der vorliegenden Erfindung vorzugsweise vorgesehen, dass der künstliche Alterungsprozess zur Bestimmung der Alterungsstabilität über eine Dauer von mindestens 37 Wochen durchgeführt wird.

Diesbezüglich sowie im Hinblick auf die Wirkung des künstlichen Alterungsprozesses hat es sich im Rahmen der vorliegenden Erfindung herausgestellt, dass die Bahn in dem künstlichen Alterungsprozess in einer Woche um vier bis fünf Monate, insbesondere um 4,5 Monate, altert. Gleichfalls kann auch davon ausgegangen werden, dass die Bahn in dem künstlichen Alterungsprozess in zwei bis drei Wochen, insbesondere in 2,5 Wochen, um ein Jahr altert. Es besteht also zwischen der angestrebten bzw. vorgesehenen Alterungsstabilität einer Bahn und der Dauer der Durchführung des künstlichen Alterungsprozesses eine vergleichsweise präzise sowie insbesondere lineare Korrelation, auf Grundlage derer insbesondere auch eine Anpassung bzw. Erweiterung des Bestimmungs- und/oder Bestätigungsumfangs der Altersstabilität einer erfindungsgemäßen Bahn möglich ist.

In diesem Sinne ist es im Rahmen der vorliegenden Erfindung also vorgesehen, dass die Dauer der Durchführung des Alterungsprozesses in Wochen in Abhängigkeit von der angestrebten Alterungsstabilität der Bahn in Jahren bestimmt ist. Gute und zuverlässige Ergebnisse werden im Rahmen der vorliegenden Erfindung demnach also erhalten, indem der künstliche Alterungsprozess beispielsweise für eine erfindungsgemäße Bahn mit einer angestrebten bzw. vorgesehenen Alterungsstabilität von mindestens 15 Jahren über eine Dauer von mindestens 36 Wochen, vorzugsweise mindestens 40 Wochen, bevorzugt mindestens 48 Wochen, besonders bevorzugt mindestens 64 Wochen, unter den vorgenannten Temperaturbedingungen und in Gegenwart der genannten Luftgeschwindigkeiten durchgeführt wird.

De Zeitdauer in Wochen für die Durchführung des künstlichen Alterungsprozesses kann also unmittelbar auf Basis der Korrelation von vorgegebener Alterungsstabilität und Alterung während des Alterungsprozesses unter den künstlichen Alterungsbedingungen, wie zuvor genannt, bestimmt werden.

Es wird in diesem Sinn also direkt die Anzahl von Jahren, die für die Alterungsstabilität der betreffenden Bahn vorgesehen bzw. vorgegeben ist, mit dem Faktor 2,5, multipliziert, um auf die Anzahl der Wochen zu schließen, über welche der künstliche Alterungsprozess für die betreffende Bahn vorzugsweise durchzuführen ist. Alternativ ist es auch vorgesehen, die angestrebte Alterungsstabilität in Jahren zunächst in Monate umzurechnen, d.h. mit dem Faktor 12 zu multiplizieren, und das hieraus erhaltene Produkt durch einen Wert von 4,5, zu teilen, woraus sich wiederum die Wochenanzahl ergibt, über welche der erfindungsgemäße künstliche Alterungsprozess bevorzugt durchzuführen ist.

Beispielsweise wäre demnach für Bahnen, die eine höhere Alterungsstabilität aufweisen, insbesondere etwa von mindestens 20 oder mindestens 25 Jahren, die die Durchführung des künstlichen Alterungsprozesses über eine Dauer von vorzugsweise mindestens 40 bzw. mindestens 50 Wochen, bevorzugt mindestens 48 bzw. mindestens 60 Wochen, vorzunehmen, um die entsprechend angestrebte Alterungsstabilität sicher und zuverlässig zu prüfen und zu bestätigen.

Was das weitere Vorgehen zur Bestimmung bzw. Bestätigung der Alterungsstabilität erfindungsgemäßer Bahnen anbelangt, so hat es sich im Rahmen der vorliegenden Erfindung als vorteilhaft erwiesen, wenn der künstliche Alterungsprozess in einem Ofen, insbesondere einem Ofen mit einer Bauweise basierend auf der Norm EN 1296-2001-03, durchgeführt wird. In diesem Zusammenhang maßgeblich ist, dass der Ofen, in dem der künstliche Alterungsprozess durchgeführt wird, insbesondere ausgelegt ist für die erfindungsgemäß vorgesehenen Temperaturen und Luftgeschwindigkeiten zur künstlichen Alterung. Entsprechend kann der Ofen in diesem Hinblick auch von der vorgenannten Norm abweichen und bspw. insbesondere für die Erzeugung höherer Luftgeschwindigkeiten ausgelegt sein.

Weiterhin werden im Rahmen der vorliegenden Erfindung besonders gute, d.h. zuverlässige und belastbare, Ergebnisse erhalten, wenn der künstliche Alterungsprozess in dem Ofen so durchgeführt wird, dass die Luft in dem Ofen regelmäßig ausgetauscht wird, insbesondere mindestens 5 mal pro Stunde, vorzugsweise 7 mal pro Stunde, bevorzugt 10 mal pro Stunde. Auf diese Weise kann bspw. eine Anreicherung von u.U. aus der Bahn ausgetriebenen, ggfs. flüchtigen, Materialbestandteilen in der Ofenatmosphäre vermieden werden. Gleichfalls kann der Sauerstoffgehalt und entsprechend das Oxidationspotential unter den künstlichen Alterungsbedingungen konstant gehalten werden, so dass insgesamt in vorteilhafter Weise sichergestellt ist, dass im Rahmen der vorliegenden Erfindung belastbare Ergebnisse in Bezug auf die Alterungsbeständigkeit erfindungsgemäßer Bahnen erhalten werden.

Was darüber hinaus die Prüfung der Wasserdichtigkeit der, insbesondere zuvor künstlich gealterten, erfindungsgemäßen Bahn anbelangt, so hat es sich in diesem Zusammenhang als vorteilhaft erwiesen, wenn die Überprüfung der Wasserdichtigkeit - zusätzlich zu der Norm DIN EN 13859-1-2010-11 - in Verbindung mit der Norm DIN EN ISO 811-2018-08 durchgeführt wird, insbesondere wobei die Überprüfung der Wasserdichtigkeit ohne Abdeckplatte bzw. Abdeckplane und begrenzt auf eine Fläche von 100 cm² der flächigen Bahn durchgeführt wird.

Es ist in diesem Zusammenhang ein weiterer Vorteil der vorliegenden Erfindung, dass die Überprüfung bzw. Bestätigung der hohen Alterungsstabilität erfindungsgemäßer Bahnen effizient und auf Basis normierter Verfahren durchgeführt werden kann, so dass für erfindungsgemäße Bahnen eindeutig, zuverlässig und reproduzierbar die Alterungsstabilität festgestellt bzw. nachgewiesen werden kann, insbesondere auch in Gegenüberstellung zu anderen bzw. weniger alterungsstabilen Bahnen des Standes der Technik.

Was nun vor dem Hintergrund der vorteilhaften, hohen Alterungsstabilität der erfindungsgemäßen flächigen Bahn den Aufbau der Bahn anbelangt, so kann dieser im Allgemeinen, je nach beabsichtigter Anwendung bzw. zu erwartenden Anwendungsbedingungen variiert und/oder angepasst werden. Es hat sich im Rahmen der vorliegenden Erfindung gleichfalls jedoch in vorteilhafter Weise ergeben, dass der - im Folgenden näher dargelegte - Aufbau erfindungsgemäßer flächiger Bahnen insbesondere die angestrebte bzw. erreichte Alterungsstabilität der Bahn, vorzugsweise maßgeblich, beeinflusst bzw. begründet.

Es ist im Rahmen der vorliegenden Erfindung dabei zunächst vorzugsweise vorgesehen, dass die erste Vliesschicht und/oder die zweite Vliesschicht außenliegend angeordnet ist. Es wird also insbesondere bevorzugt, wenn im Rahmen der vorliegenden Erfindung zumindest eine der beiden vorgesehenen Vliesschichten mindestens eine äußere Oberfläche der erfindungsgemäßen flächigen Bahn bildet. Demgegenüber noch vorteilhafter ist es, insbesondere in Bezug auf die Alterungsstabilität der erfindungsgemäßen Bahn, wenn die erste Vliesschicht und die zweite Vliesschicht je eine äußere Oberfläche der erfindungsgemäßen flächigen Bahn bilden.

Indem die Vliesschichten vorzugsweise die äußeren Oberflächen der erfindungsgemäßen Bahn bilden, kann es für den Anwendungsfall, insbesondere im Baubereich, bspw. als Unterdach- oder Fassadenbahn, gleichfalls vorgesehen sein, dass bspw. die erste Vliesschicht die Oberseite der erfindungsgemäßen Bahn und die zweite Vliesschicht die Unterseite der erfindungsgemäßen Bahn bildet. Die Oberseite entspricht in diesem Zusammenhang insbesondere der im Anwendungsfall der Witterung zugewandten Seite, während die Unterseite der erfindungsgemäßen Bahn im Anwendungsfall bevorzugt auf der von der Witterung abgewandten Seite liegt.

In diesem Sinne wird die hohe Alterungsstabilität erfindungsgemäßer Bahnen insbesondere u.a. maßgeblich durch die erste Vliesschicht und/oder die zweite Vliesschicht, insbesondere die erste Vliesschicht, welche vorzugsweise im Anwendungsfall die Oberseite der Bahn bildet bzw. der Witterung zugewandt ist, begründet.

Dementsprechend ist es im Rahmen der vorliegenden Erfindung auch vorzugsweise vorgesehen, dass die erste Vliesschicht und/oder die zweite Vliesschicht, insbesondere die erste Vliesschicht, sich durch einen besondere Beständigkeit und Dauerhaftigkeit gegenüber äußeren Umwelteinflüssen, insbesondere umweltbedingten Witterungseinflüssen, vorzugsweise oxidierend wirkenden umweltbedingten Witterungseinflüssen, auszeichnet, insbesondere wobei sich diese vorteilhaften Eigenschaften zumindest im Wesentlichen in der Materialwahl sowie auch der Verarbeitung der gewählten Materialien zu den Vliesschichten für erfindungsgemäße Bahnen begründen.

Es ist im Rahmen der vorliegenden Erfindung dabei unter einer Bahn, Schicht oder auch Lage je ein nahezu zweidimensionales Flächengebilde zu verstehen. Derartige Flächengebilde sind üblicherweise bahnförmig ausgebildet und besitzen somit lediglich zwei Flächen, insbesondere Oberflächen, d.h. die Schichtdicke der jeweiligen Lage, Schicht oder Bahn, ist gegenüber der flächenmäßigen Ausdehnung dieser zu vernachlässigen.

Zur Gewährleistung der erfindungsgemäß vorgesehenen bzw. gegebenen hohen Alterungsstabilität erfindungsgemäßer Bahnen hat es sich im Rahmen der vorliegenden Erfindung weiterhin als vorteilhaft erwiesen, wenn die erste Vliesschicht und/oder die zweite Vliesschicht als Spinnvlies und/oder als Nadelvlies ausgebildet ist.

Speziell hat es sich im Rahmen der vorliegenden Erfindung diesbez. weiter bewährt, wenn die erste Vliesschicht und/oder die zweite Vliesschicht als mechanisch, chemisch und/oder thermisch, vorzugsweise thermisch, verfestigte Vliesschicht ausgebildet ist. Vorzugsweise ist die erste Vliesschicht und/oder die zweite Vliesschicht dabei als thermoverfestigte oder nadel- oder nassstrahlverfestigte Vliesschicht ausgebildet.

Da die Vliesschicht insbesondere die mechanischen Eigenschaften der flächigen Bahn sicherstellt und darüber hinaus einen Schutz der zwischen den Vliesschichten eingefassten Membranschicht gewährleistet, kann der Einfluss der Vliesschichten auf die Alterungsstabilität der erfindungsgemäßen Bahn insbesondere zumindest im Wesentlichen als weitreichend bzw. maßgeblich aufgefasst werden. Indem dabei im Rahmen der vorliegenden Erfindung vorzugsweise speziell verfestigte Vliese verwendet werden, kann etwa eine hohe Widerstandsfähigkeit der Vliesschichten erreicht werden, insbesondere gegenüber mechanischer Belastung, wie sie beispielsweise durch langanhaltenden Windeinwirkung bzw. die Einwirkung konstanter Luftbewegung auf die Bahn hervorgerufen wird. Gleichfalls gestattet eine insbesondere verfestigte bzw. verdichtete Struktur, insbesondere Faserstruktur, der Vliesschichten auch eine gewisse Sperrwirkung gegenüber dem Eindringen von bspw. schädigender UV-Strahlung.

Die erste Vliesschicht und/oder die zweite Vliesschicht können weiterhin sowohl identisch zueinander als auch unterschiedlich voneinander ausgebildet sein, insbesondere etwa im Hinblick auf die Grammatur und/oder das Flächengewicht, die Materialzusammensetzung und/oder die Ausbildung von Vlies bzw. Faser im Vlies. Eine identische Ausbildung der Vliese ist dabei insbesondere derart zu verstehen, dass die Vliese gleiche Oberflächeneigenschaften, das gleiche Material und/oder die gleiche Materialzusammensetzung und/oder die gleiche Grammatur aufweisen. Insbesondere können die erste und die zweite Vliesschicht auch funktionsgleich ausgebildet sein, insbesondere wobei das Flächengewicht der identischen Vliesschichten um weniger als 5 g/m² voneinander abweicht.

Besonders gute Ergebnisse werden erfindungsgemäß erhalten, wenn das Flächengewicht der ersten und/oder der zweiten Vliesschicht zwischen 20 g/m² bis 120 g/m², bevorzugt 30 g/m² und 100 g/m², besonders bevorzugt 50 bis 80 g/m², liegt. Die Grammatur der Vliesschichten ist dabei derart gewählt, dass bei einem möglichst geringen Gesamtflächengewicht der flächigen Bahn weiterhin die benötigten Eigenschaften der Bahn, insbesondere im Hinblick auf Elastizität, Stabilität, Reißfestigkeit und/oder Weiterreißfestigkeit der Bahn, hinreichend gewährleistet werden können. Damit kann auf Basis der Vliesschichten, die gleichfalls auch als Schutz- bzw. Trägerschichten bezeichnet werden können, insbesondere auch ein mechanischer Schutz der Membranschicht erreicht werden.

Auch werden im Rahmen der vorliegenden Erfindung gute Ergebnisse erzielt, wenn die erste Vliesschicht und/oder die zweite Vliesschicht eine Schichtdicke im Bereich von 0,01 mm bis 2,5 cm, insbesondere 0,05 mm bis 1,5 cm, vorzugsweise 0,1 mm bis 1 cm, aufweist. Eine hohe Dauerhaftigkeit und Robustheit bzw. Beständigkeit der Vliesschichten kann im Hinblick auf die erfindungsgemäße Bahn also sowohl auf Basis vergleichsweise dünner wie auch dicker ausgebildeter Vliese erreicht werden. Dabei werden im Rahmen der vorliegenden Erfindung besonders dann gute Ergebnisse erhalten, wenn die Schichtdicke der Vliesschicht bzw. Vliesschichten in Abstimmung mit weiteren Einflussfaktoren auf die Eigenschaften der Vliesschicht bzw. Vliesschichten eingestellt wird, bspw. unter Berücksichtigung des Verfestigungsgrades der Vliese oder der zugrundeliegenden Materialauswahl. So kann beispielsweise bei einem hohen Verfestigungsgrad bzw. Grammatur des Vlieses eine Reduzierung der Vliesschichtdicke vorgenommen und gleichzeitig eine vorteilhafte Beständigkeit bzw. Dauerhaftigkeit des Vlieses erzielt werden.

Was weiterhin die Beschaffenheit der ersten Vliesschicht und/oder zweiten Vliesschicht und insbesondere der darin umfassten Vliese anbelangt, so sind die im Rahmen der vorliegenden Erfindung verwendeten Vliese der ersten und/oder zweiten Vliesschicht typischerweise aus Fasern gebildet, insbesondere bspw. Endlosfasern, insbesondere wenn das erste und/oder zweite Vlies in Form eines Spinnvlieses vorliegt.

Im Hinblick auf die Beschaffenheit der Fasern hat es sich dabei zunächst bewährt, wenn die Faser einen Durchmesser in einem Bereich von 1 bis 50 µm, bevorzugt von 5 bis 30 µm, besonders bevorzugt von 8 bis 20 µm aufweist. Neben der Faserdicke beeinflusst darüber hinaus insbesondere auch die Materialwahl bzw. Beschaffenheit der Komponenten, aus welchen die Faser gebildet ist, die Eigenschaften der Faser und somit des resultierenden Vlieses bzw. der Vliesschichten insgesamt. Insbesondere kann auf Grundlage der Faserdicke, insbesondere im Zusammenspiel mit der Materialauswahl sowie Vliesverarbeitung, eine hohe Beständigkeit der Faser und dementsprechend auch des daraus erhaltenen Vlieses bzw. der Vliesschichten erreicht werden. Hierfür haben sich insbesondere Fasern mit den vorgenannten Durchmessern als besonders geeignet erwiesen.

Des Weiteren ist es im Rahmen der vorliegenden Erfindung vorgesehen, dass die erste Vliesschicht und die zweite Vliesschicht Fasern aus einer Komponente aufweisen. In diesem Sinne ist es im Rahmen der vorliegenden Erfindung also vorgesehen, dass die erste und die zweite Vliesschicht Monokomponentenfasern, d.h. Fasern, die nur eine Komponente aufweisen, aufweist.

Erfindungsgemäß werden dabei besonders gute Ergebnisse erhalten, da Monokomponentenfasern in den Vliesschichten verwendet werden bzw. enthalten sind. Hierdurch können im Rahmen der vorliegenden Erfindung in kostengünstiger Weise Vliesschichten bereitgestellt werden, die sich durch ein einheitliches und konsistent ausgeprägtes Eigenschaftsprofil auszeichnen, so dass im Hinblick auf die erfindungsgemäße Bahn über die gesamte Bahn hinweg gewährleistet werden kann, dass insbesondere die vorgesehenen vorteilhaften Alterungseigenschaften, d.h. eine hohe Dauerhaftigkeit und Beständigkeit der Fasern bzw. Vliesschichten, gleichmäßig und zuverlässig ausgeprägt sind.

In Bezug auf die Materialauswahl für die Faserkomponente hat es sich im Rahmen der vorliegenden Erfindung bewährt, wenn die eine Faserkomponente ein oder mehrere Polymere enthält, insbesondere aus der Gruppe der thermoplastischen Kunststoffe, vorzugsweise aus der Gruppe der Polyolefine, Polyester, Polyamide und/oder thermoplastischen Polyurethane, vorzugsweise aus der Gruppe der Polyolefine, Polyester, und/oder thermoplastischen Polyurethane.

Insbesondere kann es im Rahmen der vorliegenden Erfindung vorgesehen sein, dass der thermoplastische Kunststoff aus der Gruppe der Polyolefine ausgewählt ist aus der Gruppe der Polyolefin-Homopolymere, insbesondere aus Polyethylen, Polypropylen, Polybutylen, Polyhexylen, vorzugsweise Polyethylen, Polypropylen, der Gruppe der Polyolefin-Copolymere, insbesondere aus Ethylen-Copolymeren, Propylen-Copolymeren, Butylen-Copolymeren, Hexylen-Copolymeren, vorzugsweise Ethylen-Copolymeren, Propylen-Copolymeren, und deren Mischungen bzw. Blends.

Unter einem Copolymer ist in diesen Zusammenhang ein Polymer zu verstehen, das aus mindestens zwei verschiedenen Sorten von Monomeren hergestellt wurde, wobei der Massenanteil des Monomers, welches für die Benennung des Copolymers maßgeblich ist, mindestens 50 % beträgt.

Erfindungsgemäß ist es dabei ganz besonders bevorzugt, wenn der thermoplastische Kunststoff aus der Gruppe der Polyolefine ausgewählt ist aus Polyethylen, Polypropylen, Ethylen-Copolymeren, Propylen-Copolymeren, und deren Mischungen bzw. Blends. Weiterhin werden im Rahmen der vorliegenden Erfindung insbesondere dann sehr gute Ergebnisse erhalten, wenn der thermoplastische Kunststoff aus der Gruppe der Polyolefine ausgewählt ist aus Polypropylen, Propylen-Copolymeren, und deren Mischungen bzw. Blends. Für dementsprechende Fasern bzw. insbesondere Vliesschichten werden hervorragende Alterungsstabilitäten beobachtet, insbesondere wenn die Vliesschichten darüber hinaus bspw. wie beschrieben verfestigt worden sind und/oder die vorgenannten bevorzugten Schichtdicken bzw. Faserdurchmesser aufweisen.

Es ist gänzlich überraschend, dass im Rahmen der vorliegenden Erfindung mittels der Verwendung von Monokomponentenfasern, vorzugsweise aus den vorgenannten bevorzugten Polymeren, Vliesschichten und letztlich Bahnen erhalten werden können, welche die erfindungsgemäßen hervorragenden Alterungsstabilitäten erreichen. Dies gilt üblicherweise nicht für Bahnen des Standes der Technik, die einen vermeintlich ähnlichen Aufbau wie erfindungsgemäße Bahnen aufweise. Vielmehr bestehen relevante Unterschiede zwischen den bekannten Bahnen des Standes der Technik und der erfindungsgemäß beschriebenen Bahn. Hierbei ergeben sich diese Unterschiede, d.h. vor allem die erfindungsgemäß erreichte vorteilhafte Alterungsstabilität, - ohne sich hierauf festlegen zu wollen - insbesondere infolge kombinierter bzw. synergistisch wirkender Effekte für die erfindungsgemäße Bahn, wobei diese Effekte auf das vorteilhafte Zusammenspiel aus u.a. bspw. Bahnkonstruktion, Materialauswahl, Materialbeschaffenheit und/oder Verarbeitung der erfindungsgemäßen Bahn zurückzuführen sind. Die erfindungsgemäße Bahn besteht vorzugsweise aus bekannten Materialien bzw. Materialkombinationen, wobei die einzelnen Materialien derart aufeinander abgestimmt werden, dass sie die erhöhte bzw. verbesserte Alterungsbeständigkeit aufweisen. Bahnen des Standes der Technik sind üblicherweise derart konzipiert, dass sie die Wasserdichtigkeitsprüfung nach DIN EN 13859-1-2010-11 erfüllen, d. h. Bestrahlung und UV-Licht über 336 Stunden und Lagerung bei 70 °C für 90 Tage, nicht jedoch die zusätzlichen Bedingungen gemäß der vorliegenden Erfindung.

Im Fall der alternativen bevorzugten Ausführungsform der vorliegenden Erfindung, gemäß welcher die eine Faserkomponente aus einem thermoplastischen Kunststoff aus der Gruppe von Polyestern ausgewählt ist, hat es sich bewährt, wenn der thermoplastische Kunststoff aus der Gruppe der Polyester ausgewählt ist aus Polyethylenterephthalat, Polybutylenterephthalat, Polytrimethylenterephthalat, Polyethylenfuranoat, deren Copolymeren und deren Mischungen bzw. Blends, insbesondere Polyethylenterephthalat, Polybutylenterephthalat, Polyethylenfuranoat, deren Copolymeren und deren Mischungen bzw. Blends, vorzugsweise Polyethylenterephthalat, Polyethylenfuranoat, deren Copolymeren und deren Mischungen bzw. Blends.

Insbesondere können die vorgenannten Polyester aus zumindest im Wesentlichen zu 100 % recycelten und/oder nachwachsenden Rohstoffen erhalten sein, wodurch zusätzlich eine hohe ökologische Kompatibilität erreicht werden kann. Weiterhin kann sich die Verwendung von Polyestern für die Faserkomponenten auch deshalb anbieten, da sich die entsprechend erhaltenen Fasern durch eine vergleichsweise hohe Härte bzw. Robustheit und Zähigkeit auszeichnen, was sich letztlich wiederum positiv auf die Alterungsstabilität der erfindungsgemäßen Bahn auswirkt.

Für den Fall, dass thermoplastische Polyurethane als thermoplastische Kunststoffe für die eine Faserkomponente ausgewählt sein sollten, hat es sich im Rahmen der vorliegenden Erfindung als vorteilhaft erwiesen, wenn der thermoplastische Kunststoff aus der Gruppe der thermoplastischen Polyurethane ausgewählt ist aus der Gruppe der aliphatischen und/oder aromatischen Polyurethane, insbesondere des Ether-Typs, des Ester-Typs, des Carbonat-Typs und deren Mischungen bzw. Blends, insbesondere der aliphatischen und/oder aromatischen Polyurethane des Ether-Typs, Ester-Typs und deren Mischungen bzw. Blends, vorzugsweise der aliphatischen und/oder aromatischen Polyurethane des Ether-Typs.

Unter einem thermoplastischen Polyurethan ist im Rahmen der vorliegenden Erfindung dabei ein thermoplastisches Elastomer zu verstehen, welches zumindest im Wesentlichen aus Polyurethan gebildet ist bzw. Monomere mit Urethan-Wiederholungseinheiten aufweist.

Thermoplastische Elastomere, wie thermoplastisches Polyurethan (TPU), zeigen bei Raumtemperatur elastomeres Verhalten, unter Wärmezufuhr weisen sie jedoch ein thermoplastisches Verhalten auf. Ein besonderer Vorteil von thermoplastischen Elastomeren ist, dass die im Vergleich zu reinen Elastomeren durch Wärmeeinfluss jederzeit reversibel umgeformt werden können. Ein elastomeres Verhalten des Polymers der Faserkomponente kann sich vorteilhaft auf die mechanischen Eigenschaften des hierauf basierenden Vlieses auswirken, insbesondere da die erhaltenen Vliese bzw. Vliesschichten eine vergleichsweise hohe Nachgiebigkeit bzw. Elastizität aufweisen, welche im Hinblick auf die im Anwendungsfall konstante Einwirkung von Luftbewegungen von Vorteil sein kann. Insbesondere können dementsprechend beschaffene Vliesschichten Schwing- und Flatterbewegungen in der Relation gut überdauern und tolerieren, was letztlich wiederum der Alterungsbeständigkeit der erfindungsgemäßen Bahn zugutekommt.

Auch zeichnet sich thermoplastisches Polyurethan durch einen hohe Verbindbarkeit aus, so dass Vliesschichten erhalten werden können, die eine vergleichsweise hohe Verbundstärke aufweisen. Entsprechende Vliesschichten und daraus erhaltene Bahnen können also als besonders stabil unter mechanischer Belastung aufgefasst werden.

Unter guter Verbindbarkeit ist in diesem Sinne zu verstehen, dass sich beim Verbinden der Fasern während der Herstellung eines Vlieses die Beweglichkeit der Fasern im Vlies möglichst definiert einstellen lässt. Die gezielte Einstellung der Beweglichkeit der Fasern im Vlies, welche von der Stärke der Verbindung der Fasern untereinander abhängt, ist die Voraussetzung für die Herstellung eines Vlieses mit hoher spezifischer Reißfestigkeit und gleichzeitig hoher spezifischer Nagelausrei ßkraft.

Unter einem thermoplastischen Polyurethan vom Ether-Typ bzw. unter einem Ether-TPU ist im Rahmen der vorliegenden Erfindung ein thermoplastisches Polyurethan zu verstehen, dessen Weichsegment aus Polyethern aufgebaut ist. Diese Polyether sind dabei vorzugsweise aus Polyetheralkoholen, insbesondere mit der Hydroxyfunktionalität 2, d. h. aus Diolen erhältlich. Die Polyetheralkohole, insbesondere die Polyetherdiole, sind üblicherweise durch Polymerisation kurzkettiger Precursoren, insbesondere beispielsweise durch anionische Polymerisation mit Alkalihydroxiden, wie beispielsweise Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluid-Etherat, als Katalysatoren aus einem oder mehreren Alkylenoxiden oder zyklischen Ethern mit bevorzugt 2 bis 4 Kohlenstoffatomen im Alkylenrest erhältlich. Besonders geeignete Verbindungen für die Polymerisation sind beispielsweise Tetrahydrofuran, 1,3-Propylenoxid, 1,2- und 2,3-Butylenoxid, 1,4-Butylenoxid, Ethylenoxid und 1,2-Propylenoxid. Die Alkylenoxide können einzeln, alternierend oder als Mischung bei der Polymerisation eingesetzt werden.

In Abhängigkeit der Anzahl an Kohlenstoffatomen in der Kette zwischen den Etherfunktionalitäten des Alkylenrestes werden die thermoplastischen Ether-Polyurethane unterteilt, wobei C2-Ether-Polyurethane, C3-Ether-Polyurethane und C4-Ether-Polyurethane am weitesten verbreitet sind. C2-Ether-Polyurethane sind beispielsweise erhältlich durch Polymerisation von Ethylenoxid, 1,2-Propylenoxid, 1,2- und 2,3-Butylenoxid. C3-Ether-Polyurethane sind beispielsweise erhältlich durch Polymerisation von 1,3-Propylenoxid. C4-Ether-Polyurethane sind durch Polymerisation von 1,4-Butylenoxid erhältlich.

Unter einem thermoplastischen Polyurethan vom Polyester-Typ bzw. unter einem Polyester-TPU ist im Rahmen der vorliegenden Erfindung ein thermoplastisches Polyurethan zu verstehen, dessen Weichsegment aus Polyesterpolyolen, insbesondere Polyesterdiolen, gebildet wird.

Ein thermoplastisches Polyurethan vom Ether-Ester-Typ bzw. ein Ether-Ester-TPU ist im Rahmen der vorliegenden Erfindung ein Polyurethan, dessen Weichsegment aus Polyethern bzw. Oligoethern und Polyestern gebildet wird.

Ein thermoplastisches Polyurethan vom Carbonat-Typ bzw. ein Carbonat-TPU ist im Rahmen der vorliegenden Erfindung durch ein Polyol, insbesondere Diol, gebildet, welches ein Strukturelement eines Kohlensäurediesters aufweist.

Im Hinblick auf die unterschiedlichen Eigenschaften der verschiedenen TPUs weisen aromatische Ester-TPUs sowie aromatische Ether-Ester-TPUs eine relative Hydrolyseempfindlichkeit und nur moderate Bewitterungseigenschaften auf. Sie besitzen jedoch eine inhärent flammenhemmende Wirkung sowie gute mechanische Eigenschaften, wie z. B. eine geringe Weitereißfestigkeit und eine hohe Abriebfestigkeit.

Aromatische C4-Ether-TPUs besitzen gleichfalls moderate Bewitterungseigenschaften, sind jedoch nicht hydrolyseempfindlich und weisen inhärent flammenhemmende Eigenschaften auf. Aromatische C4-Ether-TPUs sind häufig in Dachunterspannbahnen anzutreffen.

Aromatische C2- und/oder C3-Ether-TPUs sind die preisgünstigsten thermoplastischen Polyurethane. Sie sind nicht hydrolyseempfindlich und besitzen inhärent flammenhemmende Wirkung. Die Bewitterungseigenschaften sind jedoch nicht zufriedenstellend, so dass Baufolien für Außenanwendungen in der Regel nicht auf Basis von C2- bzw. C3-Ether-TPUs ausgebildet werden.

Aromatische Carbonat-TPUs besitzen eine exzellente inhärente flammenhemmende Wirkung sowie eine sehr gute Bewitterungsstabilität und sind darüber hinaus im hohen Maße hydrolyse- und warmlagerungsbeständig. Allerdings sind aromatische Carbonat-TPUs kostenintensiv in der Herstellung, weshalb sie bislang nur vereinzelt in Spezialanwendungen zum Einsatz kommen.

Aliphatische TPUs schließlich besitzen eine exzellente Bewitterungsbeständigkeit und vergilben nicht unter Lichteinfluss. Sie weisen jedoch keine inhärent flammenhemmende Wirkung auf, haben eine hohe Quellneigung bei Wasseraufnahme und sind darüber hinaus extrem kostenintensiv. Aufgrund dieser Nachteile werden aliphatische TPUs im Baubereich nahezu nicht eingesetzt.

Im Rahmen der vorliegenden Erfindung ist es im Hinblick auf die vielzähligen Arten unterschiedlicher TPUs mit den beschriebenen diversen physikalischen wie chemischen Eigenschaften insbesondere vorteilhaft, wenn die vorgenannten verschiedenen TPUs miteinander kombiniert werden, insbesondere in einer Faser bzw. zu einer Faserkomponente des ersten und/oder zweiten Vlies.

Erfindungsgemäß besonders geeignete thermoplastische Polyurethane können dabei ein Hartsegment und ein Weichsegment aufweisen, wobei das Weichsegment üblicherweise durch ein oligomeres oder polymeres Polyol gebildet ist und das Hartsegment aus einem Diisocyanat, welches als Kettenverlängerer kurzkettige Diole aufweist.

Als Kettenverlängerer werden insbesondere kurzkettige bifunktionale Stoffe, insbesondere Diole, eingesetzt, deren Molekulargewicht üblicherweise zwischen 18 und 350 g/mol beträgt. Bevorzugt werden kurzkettige Diole als Kettenverlängerer eingesetzt. Üblicherweise handelt es sich bei den Kettenverlängerern um zweiwertige Alkohole, insbesondere ausgewählt aus der Gruppe von 1,2-Ethandiol, 1,2-Propandiol, 1,4-Butandiol, 2,3-Butandiol, 1,5-Pentandiol, 1,6-Hexandiol, 1,8-Octandiol, Diethylenglykol, Triethylenglykol, Tetraethylenglykol und höhere Oligoethylenglykole, Dipropylenglykol und höhere Oligopropylenglykole, Dibutylenglykol, höhere Oligoethylenglykole sowie deren Mischungen.

Im Rahmen der vorliegenden Erfindung ist unter einem aliphatischen oder einem aromatischen Polyurethan ein Polyurethan zu verstehen, dessen Hartsegment aliphatische oder aromatische Diisocyanate enthält bzw. aus diesen durch Umsetzung mit den Kettenverlängerern erhalten wird.

Bei den aromatischen Diisocyanaten handelt es sich vorzugsweise um TDI (Toluol 2,4-diisocyanat), NDI (Naphtylen-1,5-diisocyanat), MDI (Methylendi(phenylisocyanat), PDI (Polymeres Diphenylmethandiisocyanat) oder deren Mischungen.

Aliphatische Diisocyanate werden vorzugsweise ausgewählt aus H12MDI (1-Isocyanato-4-[(4-isocyanotocyclohexyl)methyl]cyclohexan), HDI (1,6-Hexamethylendiisocyanat), IPDI (3-Isocyanatmethyl-3,5,5-trimethylcyclohexylisocyanat), TMXDI (Tetramethylxylydiisocyanat) und CHDI (1,4-Cylcohexyldiisocyanat) sowie deren Mischungen.

Darüber hinaus kann es auch vorgesehen sein, dass die Faserkomponente Polymere aus nachwachsenden Rohstoffen aufweist, insbesondere etwa Polylactid. Zur weiteren Verbesserung der Eigenschaften der Faser können der Faserkomponente bzw. insbesondere den enthaltenen Polymeren, insbesondere den thermoplastischen Kunststoffen, Additive zugesetzt werden. Der Zusatz von Additiven erlaubt in vorteilhafter Weise eine Beeinflussung bzw. insbesondere Optimierung der Materialeigenschaften der im Rahmen der vorliegenden Erfindung in den Vliesschichten verwendeten Faser bzw. deren Komponente. In diesem Sinne ist mit der gezielten und gerichteten Verwendung von Additiven eine insbesondere positive Beeinflussung der Alterungsstabilität erfindungsgemäßer Bahnen möglich.

Geeignete Additive können dabei aus den verschiedensten Stoffen ausgewählt sein und beispielsweise zur Färbung, zur Thermostabilisation, zur Flammhemmung, zur Hydrophilierung oder Hydrophobierung oder zur UV-Stabilisation des thermoplastischen Kunststoffes bzw. der Faser insgesamt dienen. Dabei ist es generell vorgesehen, dass die Additive regelmäßig bzw. gleichmäßig in der Faser, insbesondere der polymeren Phase des thermoplastischen Kunststoffes, verteilt sind. In diesem Sinne können Additive auch als Zusatzstoffe verstanden werden, die der Faser bzw. insbesondere dem enthaltenen Polymer bzw. Kunststoff zugefügt werden, um die Eigenschaften der Faser bzw. des aus der Faser gewonnenen Spinnvlieses zu modifizieren bzw. zu verbessern.

Hierbei werden im Rahmen der vorliegenden Erfindung besonders gute Ergebnisse erhalten, wenn es sich bei dem Additiv um ein primäres oder sekundäres Antioxidanz, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Antifogging-Additiv und/oder ein Biozid handelt. Besonders bevorzugt sind dabei folgende Stoffklassen und Mischungen daraus:
- Sterisch gehinderte Phenole, aromatische sekundäre oder tertiäre Amine, Aminophenole, aromatische Nitro- oder Nitrosoverbindungen als primäre Antioxidantien.
- Organische Phosphite oder Phosphonate, Thioether, Thioalkohole, Thioester, Sulfide und schwefelhaltige organische Säuren, Dithiocarbamate, Thiodipropionate, Aminopyrazole, metallhaltige Chelate, Mercaptobenzimidazole als sekundäre Antioxidantien.
- Hydroxybenzophenone, Cinnamate, Oxalanilide, Salicylate, 1,3 Benzoldiol-Monobenzoate, Benzotriazole, Triazine, Benzophenone sowie UVabsorbierende Pigmente wie Titandioxid oder Ruß als UV-Absorber.
- Metallhaltige Komplexe organischer Schwefel- oder Phosphorverbindungen, sterisch gehinderte Amine (HALS) als UV-Stabilisatoren.
- Metallhydroxide, Borate, organische brom- oder chlorhaltige Verbindungen, organische Phosphorverbindungen, Antimontrixoxid, Melamin, Melamincyanurat, Blähgraphit oder andere Intumeszenz-Systeme als Flammhemmer.
- Quartäre Ammoniumsalze, Alkylsulfonate, Alkylsufate, Alkylphosphate, Dithiocarbamate, (Erd-)Alkalimetallcarboxylate, Polyethylenglykole sowie deren Ester und Ether, Fettsäureester, Ethoxylate, Mono- und Diglyceride, Ethanolamine als Antistatika.
- Fettalkohole, Ester von Fettalkoholen, Fettsäuren, Fettsäureester, Dicarbonsäureester, Fettsäureamide, Metallsalze von Fettsäuren, Polyolefinwachse, natürliche oder künstliche Paraffine und deren Derivate, Fluorpolymere und Fluoroligomere, Antiblockmittel wie Kieselsäuren, Silikone, Silikate, Calciumcarbonat etc. als Gleitmittel.
- Amide von Mono- und Dicarbonsäuren und deren Derivate, zyklische Amide, Hydrazone und Bishydrazone, Hydrazide, Hydrazine, Melamin und dessen Derivate, Benzotriazole, Aminotriazole, sterisch gehinderte Phenole in Verbindung mit komplexierenden Metallverbindungen, Benzylphosphonate, Pyridithiole, Thiobisphenolester als Metalldesaktivatoren.
- Polyglycole, Ethoxylate, Fluorpolymere und Fluoroligomere, Montanwachse, insbesondere Stearate, als Hydrophilierungs-, Hydrophobierungs- oder AntiFogging-mittel.
- 10,10'-Oxybisphenoxarsin (OBPA), N-(Trihalogen-methylthiol)phthalimid, Tributylzinnoxid, Zinkdimethyldithiocarbamat, Diphenylantimon-2-ethylhexanoat, Kupfer-8-hydroxychinolin, Isothiazolone, Silber und Silbersalze als Biozide.

Was nun weiter die Beschaffenheit der im Rahmen der vorliegenden Erfindung verwendeten Vliesschichten betrifft, so ist es erfindungsgemäß vorgesehen, dass die erste Vliesschicht und die zweite Vliesschicht als Monokomponentenfaservlies ausgebildet ist.

Unter einem Monokomponentenfaservlies wird im Rahmen der vorliegenden Erfindung, wie bereits erwähnt wurde, ein Vlies verstanden, dass aus Fasern gebildet ist, die im Wesentlichen lediglich eine Faserkomponente aufweisen. Bevorzugt kann es auch vorgesehen sein, dass die Faserkomponente lediglich ein Polymer, insbesondere lediglich einen thermoplastischen Kunststoff, als Faserkomponente enthält, insbesondere wobei das eine Polymer bzw. der eine thermoplastische Kunststoff gleichfalls bspw. noch Additive umfassen und/oder ein Copolymer sein kann.

Im Rahmen einer ganz besonders bevorzugten Ausführungsform der vorliegenden Erfindung kann es dabei vorgesehen sein, dass das Monokomponentenfaservlies Fasern aus einer Komponente enthaltend ein Polymer, insbesondere einen thermoplastischen Kunststoff, vorzugsweise ausgewählt aus der Gruppe der Polyolefine, bevorzugt aus Polypropylen oder Propylen-Copolymeren, aufweist, insbesondere wobei das Polymer, insbesondere der thermoplastische Kunststoff, Additive aufweist.

Derartig beschaffene Monokomponentenfaservliese haben sich als besonders geeignet für die erste und/oder zweite Vliesschicht erfindungsgemäßer Bahnen erwiesen. Die Vliese zeichnen sich durch eine hohe Haltbarkeit sowie Resistenz gegenüber umweltbedingten Einflüssen aus. Insbesondere wurde für derartig beschaffene, bevorzugte Vliese festgestellt, dass diese auch in Gegenwart konstanter Luftbewegung sowohl ihre mechanische Festigkeit und Widerstandsfähigkeit als auch die strukturelle Integrität über einen Zeitraum von mehreren Jahren bzw. Jahrzehnten behalten.

Dabei ist vor allem beobachtet worden sowie insbesondere von Vorteil, dass selbst in Gegenwart konstanter Luftbewegung keine verstärkte oberflächliche Oxidation von Vliesbestandteilen stattzufinden scheint. Auch eine Migration von bspw. Additivbestandteilen aus der Faser an die Vliesoberfläche infolge konstanter Bewegung der Luft und in der Folge einer erhöhten Zufuhr von Sauerstoff kann nicht beobachtet werden. Diese insbesondere hohe strukturelle Integrität und auch chemische sowie mechanische Beständigkeit der Monokomponentenfaservliese tragen mutmaßlich maßgeblich zu der insgesamt hohen Alterungsbeständigkeit dieser bevorzugten Vliese wie auch der erfindungsgemäßen Bahnen bei.

Zwei Eigenschaften, die im Allgemeinen bei Vliesen eine besondere Rolle spielen, sind die spezifische Reißkraft des Vlieses sowie die spezifische Nagelausreißkraft des Vlieses. Dabei wird eine wünschenswerte hohe spezifische Reißkraft durch Fasern mit hoher Festigkeit erreicht. Sowohl eine hohe Reißkraft als auch eine hohe spezifische Nagelausreißkraft wirken sich vorteilhaft auf die Alterungsstabilität von Bahnen, wie sie die vorliegende Erfindung vorschlägt, aus.

Vorteilhafterweise beträgt die spezifische Reißkraft des Vlieses der ersten und/oder zweiten Vliesschicht im Rahmen der vorliegenden Erfindung hierbei also mindestens 50 N/5 cm in Maschinenrichtung und/oder mindestens 30 N/5 cm in Querrichtung, vorzugsweise 55 N/5 cm in Maschinenrichtung und/oder mindestens 35 N/5 cm in Querrichtung, bevorzugt mindestens 55 N/5 cm in Maschinenrichtung und/oder mindestens 38 N/5 cm in Querrichtung, besonders bevorzugt mindestens 57 N/5 cm in Maschinenrichtung und/oder mindestens 40 N/5 cm in Querrichtung. Die spezifische Reißkraft wird dabei gemessen nach EN 12311-1.

Weiter vorteilhaft beträgt die spezifische Reißdehnung des Vlieses der ersten und/oder zweiten Vliesschicht im Rahmen der vorliegenden Erfindung mindestens 40 % in Maschinenrichtung und/oder mindestens 45 % in Querrichtung, insbesondere mindestens 45 % in Maschinenrichtung und/oder mindestens 50 % in Querrichtung, vorzugsweise mindestens 48 % in Maschinenrichtung und/oder mindestens 53 % in Querrichtung, bevorzugt mindestens 50 % in Maschinenrichtung und/oder mindestens 55 % in Querrichtung, besonders bevorzugt mindestens 52 % in Maschinenrichtung und/oder mindestens 57 % in Querrichtung.

Weiterhin beträgt die spezifische Nagelausreißkraft des Vlieses der ersten und/oder zweiten Vliesschicht vorteilhafterweise mindestens 20 N in Maschinenrichtung und/oder mindestens 22 N in Querrichtung, vorzugsweise mindestens 23 N in Maschinenrichtung und/ oder mindestens 25 N in Querrichtung, bevorzugt mindestens 25 N in Maschinenrichtung und/oder mindestens 27 N in Querrichtung, besonders bevorzugt mindestens 26 N in Maschinenrichtung und/oder mindestens 28 N Querrichtung.

Die spezifische Nagelausreißkraft ist dabei die maximale Kraft, die beim Zerreißen eines Vliesstreifens auftritt, wenn der Vliesstreifen bereits eine gegebene Beschädigung, nämlich einen durch den Vliesstoff gestoßenen Nagel, aufweist. Gemessen wird die spezifische Nagelausreißkraft nach EN 12310-1. Es hat sich gezeigt, dass die genannten Mindestwerte für die spezifische Nagelausreißkraft des Vlieses angestrebt werden können, ohne dass die spezifische Reißkraft des Vlieses unverhältnismäßig absinkt. Insbesondere ist es dabei auch möglich, eine Kombination der genannten spezifischen vorteilhaften Nagelausreißkräfte und der zuvor genannten, vorteilhaften spezifischen Mindestreißkräfte zu realisieren.

In der Praxis geht eine hohe spezifische Nagelausreißfestigkeit oft mit einer guten Haptik einher. Die Weichheit und der textile Griff derartiger Vliese und der resultierenden Bahnen eröffnen daher auch Anwendungen, z.B. Anwendungen im Hygiene- oder Medizinbereich. Ursächlich für die gute Haptik ist die hohe Beweglichkeit einzelner Fasern, die regelmäßig mit dem Auftreten hoher Nagelausreißkräfte einhergeht. Fasern, die sich derart verhalten, weisen in der Praxis regelmäßig auch als weich und angenehm empfundene haptische Eigenschaften auf. Die Fasersegmentbeweglichkeit ermöglicht es, dass sich Fasern bei der Bewegung des Nagels durch das Vlies in dem Nagel "sammeln", indem sie den Nagel, der sich durch das Vlies bewegt, ausweichen und nicht sofort zerreißen. Dies führt zu einer Zone erhöhter Faserdichte, also eine Zone erhöhter Festigkeit, um den Nagel.

Was nun die Membranschicht der erfindungsgemäßen flächigen Bahn anbelangt, so wird unter dieser insbesondere eine derartige Schicht verstanden, die eine selektive Durchlässigkeit aufweist. Membranen können grundsätzlich unterschiedlich beschaffen und insbesondere als Folien oder Textilien ausgebildet sein. Membranschichten stellen beispielsweise beim Einsatz als bzw. in einer Unterdachbahn sicher, dass die äußeren Einflüsse der Witterung keinen schädlichen Einfluss für das Gebäudeinnere bewirken. Die Membranschicht kann somit gleichfalls auch als Funktionsschicht bzw. Funktionsmembran aufgefasst werden.

Was die Beschaffenheit bzw. Ausgestaltung der Membranschicht anbelangt, so kann diese in Abhängigkeit von der beabsichtigen Verwendung der erfindungsgemäßen flächigen Bahn bzw. den entsprechend zu erwartenden Anwendungsbedingungen variieren. Üblicherweise ist es im Rahmen der vorliegenden Erfindung jedoch bevorzugt, wenn die Membranschicht wasserdicht und wasserdampfdurchlässig ausgebildet ist.

Wie zuvor ausgeführt, ist es erfindungsgemäß vorgesehen, dass die Membranschicht als monolithische Membranschicht ausgebildet ist.

Unter einer monolithischen Membranschicht wird insbesondere eine porenfreie Schicht einer Membran verstanden. Monolithische Membranschichten können insbesondere einen besonders guten Schutz gegen Schlagregen bei gleichzeitiger Diffusionsoffenheit gewährleisten. Anders als bei der herkömmlichen mikroporösen Membranschicht kann der Feuchtetransport aktiv entlang der Molekülketten der Materialien, aus welcher die Membranschicht gebildet ist, durch Diffusion stattfinden.

Um diese vorteilhaften Eigenschaften möglichst sicherzustellen bzw. in der Membranschicht einzustellen, ist es im Rahmen der vorliegenden Erfindung vorgesehen, dass die Membranschicht ein thermoplastisches Elastomer, insbesondere ausgewählt aus der Gruppe von thermoplastischen Polyurethanen und/oder thermoplastischen Copolyestern (TPEE), aufweist oder hieraus besteht.

Insofern es sich bei dem thermoplastischen Elastomer um ein thermoplastisches Polyurethan handelt, so wird es im Rahmen der vorliegenden Erfindung bevorzugt, wenn das thermoplastische Elastomer ausgewählt ist aus der Gruppe von thermoplastischen Polyurethanen, insbesondere aus der Gruppe der aliphatischen und/oder aromatischen Polyurethane, insbesondere des Ether-Typs, des Ester-Typs, des Carbonat-Typs und deren Mischungen bzw. Blends, insbesondere der aliphatischen und/oder aromatischen Polyurethane des Ether-Typs, Ester-Typs und deren Mischungen bzw. Blends, vorzugsweise der aliphatischen und/oder aromatischen Polyurethane des Ether-Typs.

Bevorzugt können in der Membranschicht erfindungsgemäßer Bahnen dabei solche thermoplastischen Polyurethane enthalten sein, wie sie zuvor bereits im Zusammenhang mit den Faserkomponenten der ersten und/oder zweiten Spinnvliesschicht erläutert wurden. In diesem Sinne wird an dieser Stelle auf die obigen Ausführungen zu erfindungsgemäß geeigneten bzw. insbesondere bevorzugten thermoplastischen Polyurethanen verwiesen.

Besonders bevorzugt ist es hierbei im Rahmen der vorliegenden Erfindung, wenn die Membranschicht ein thermoplastisches Elastomer ausgewählt aus der Gruppe von thermoplastischen Polyurethanen aus der Gruppe der aliphatischen und/oder aromatischen Polyurethane, des Ether-Typs aufweist.

Insbesondere thermoplastische Polyurethane aus der Gruppe der aliphatischen und/oder aromatischen Polyurethane des Ether-Typs zeichnen sich durch eine vergleichsweise hohe Hydrolysebeständigkeit sowie Widerstandsfähigkeit gegenüber umweltbedingten Witterungseinflüssen aus. Dies wirkt sich besonders vorteilhaft auf die Alterungsbeständigkeit der erfindungsgemäßen Bahn aus und trägt, insbesondere im Zusammenspiel mit der Beschaffenheit der ersten und/oder zweiten Vliesschicht, in positiver Weise zu der hervorragenden Dauerhaftigkeit und Beständigkeit der erfindungsgemäßen Bahn bei.

Im Rahmen einer weiteren bevorzugten Ausführungsform der erfindungsgemäßen Bahn ist es zudem vorgesehen, dass das Material der Funktionsschicht, insbesondere das thermoplastische Polyurethan, einen Anteil von wenigstens 10 %, bevorzugt von 15% bis 100 %, weiter bevorzugt von 20 % bis 70 %, an aus nachwachsenden Rohstoffen stammendem Material aufweist. Unter nachwachsende Rohstoffe (NawaRo bzw. NR) sind insbesondere organische Rohstoffe zu verstehen, die aus land- und forstwirtschaftlicher Produktion stammen und zielgerichtet für weiterführende Anwendungszwecke außerhalb des Nahrungs- und Futterbereiches verwendet werden.

Auch auf die Eigenschaften der Membranschicht kann es sich außerdem vorteilhaft auswirken, wenn die Membran, insbesondere das in der Membran enthaltene thermoplastische Polymer, Additive, insbesondere wie zuvor im Zusammenhang mit den in der ersten und/oder zweiten Vliesschicht enthaltenen Fasern bzw. deren Komponenten aufgeführt, enthält. Ebenso wie im Falle der Fasern der Vliesschichten kann auch die Membranschicht durch den Zusatz ausgewählter Additive insbesondere gegenüber externen Umwelteinflüssen stabilisiert und so alterungsbeständiger ausgebildet werden.

Besonders gute Ergebnisse, d.h. insbesondere hochalterungsstabile sowie auch langzeitfunktionale, Bahnen werden im Rahmen der vorliegenden Erfindung erhalten, wenn die Membranschicht eine Grammatur bzw. ein Flächengewicht im Bereich von 10 bis 150 g/m², insbesondere von 15 bis 100 g/m², vorzugsweise 18 bis 80 g/m², bevorzugt 20 bis 50 g/m², aufweist.

Im Rahmen einer alternativen bevorzugten Ausführungsform der vorliegenden Erfindung hat es sich gleichfalls bewährt, wenn die Membranschicht eine Grammatur bzw. ein Flächengewicht von kleiner als 100 g/m² aufweist. Insbesondere kann das Flächengewicht zwischen 1 bis 70 g/m², weiter bevorzugt zwischen 3 bis 40 g/m², besonders bevorzugt zwischen 4 bis 30 g/m² und insbesondere zwischen 5 bis 25 g/m², liegen.

Was die weitere Ausgestaltung der Membranschicht anbelangt, so kann es zudem vorgesehen sein, dass die Membranschicht wenigstens zwei Lagen von Membranschichten aufweist. Diese Membranschichtlagen können dabei unterschiedlich ausgebildet sein oder aber die wenigstens zwei Membranschichtlagen können zumindest im Wesentlichen identisch ausgebildet sein. So kann in effizienter und insgesamt vorteilhafter Weise das Funktionsspektrum bzw. die Bandbreite der Funktionalität der erfindungsgemäßen Bahn erweitert und gleichzeitig auch die Beständigkeit bzw. Dauerhaftigkeit der erfindungsgemäßen Bahn optimiert werden. Neben einem zweilagigen Aufbau ist dabei insbesondere und je nach Anwendungsfall bzw. -bedingungen auch ein drei- oder sogar vierlagier Membranaufbau denkbar.

Insbesondere kann es etwa bei einem dreilagigen Aufbau der Membranschicht vorgesehen sein, dass die äußeren Membranlagen, welche eine mittige Membranlage einfassen, zumindest im Wesentlichen identisch ausgebildet sind, insbesondere wobei für die äußeren Membranlagen eine vorzugsweise alterungs- bzw. witterungsstabile Ausbildung gewählt ist.

Unter einer identischen Ausbildung ist insbesondere zu verstehen, dass die Membranschichtlagen gleiche Oberflächeneigenschaften und/oder das gleiche Material und/oder die gleiche Materialzusammensetzung aufweisen. Letztlich können die identischen Membranschichtlagen auch funktionsgleich ausgebildet sein.

Beispielsweise können sich die Flächengewichte der identisch ausgebildeten Membranschichtlagen etwa um weniger als 5 g/m² voneinander unterscheiden.

Weiterhin kann es im Rahmen der vorliegenden Erfindung vorgesehen sein, dass die Bahn mehrere Membranschichten umfasst. Umfasst die erfindungsgemäße Bahn mehrere Membranschichten, so kann es von Vorteil sein, wenn die mehreren Membranschichten unmittelbar aufeinanderliegend angeordnet sind. Gleichfalls ist es auch möglich, dass die mehreren Membranschichten separat voneinander angeordnet sind, insbesondere wobei die Membranschichten durch eine weitere Vliesschicht und/oder eine Gewebeschicht separiert sind. Darüber hinaus ist es zudem möglich, dass die mehreren Membranschichten je auch mehrere Membranschichtenlagen aufweisen.

Im Rahmen einer ganz besonders bevorzugten Ausführungsform der vorliegenden Erfindung kann es vorgesehen sein, dass wenigstens eine Membranschichtlage der Membranschicht, insbesondere eine außenseitige, vorzugsweise der ersten und/oder der zweiten Vliesschicht zugewandte, Membranschichtlage, als Material thermoplastisches Copolyester (TPEE) und/oder thermoplastisches Polyurethan (TPU) aufweist und/oder daraus besteht.

Des Weiteren kann bei einer bevorzugten Ausführungsform der Erfindung die Membranschicht aus TPEE-Schichten und/oder TPU-Schichten und/oder aus TPEE-Schichten sowie TPU-Schichten ausgebildet sein. Insbesondere sind die TPEE-Schichten und/oder die TPU-Schichten und/oder die Membranschichtlagen der Membranschicht fest miteinander, insbesondere untrennbar, verbunden.

TPEE-Schichten besitzen dabei eine gute bzw. hohe Weiterreißfestigkeit bei einer gleichzeitigen hohen Festigkeit sowie Steifigkeit unter Gewährleistung der Beständigkeit gegenüber Flüssigkeiten. Eine monolithische TPEE-Membran ist insbesondere gut extrudierbar und auch für dünne Membranen geeignet. Insbesondere ist eine TPEE aufweisende Membranschicht für eine insbesondere mehrlagige koextrudierte Bahn geeignet und aus technischer Sicht sinnvoll.

TPU ist darüber hinaus insbesondere intrinsisch flammenhemmend und weist ein gutes Langzeitalterungsverhalten auf, vorzugsweise für Standzeiten von mehr als 10 Jahren.

Bei einer weiteren bevorzugten Ausführungsform der vorliegenden Erfindung ist vorgesehen, dass wenigstens eine außenseitige Membranschichtlage und/oder eine innere Membranschichtlage der mehrlagigen Membranschicht ein geschäumtes Polymer aufweist und/oder daraus besteht.

Die außenseitige geschäumte Schicht der Membranschicht kann beim Extrusionskaschierprozess eine Verkrallung mit den Vliesschichten - das heißt der ersten und/oder der zweiten Vliesschicht-erzielen, wodurch die Verbundhaftung mit den Vliesschichten verbessert wird, was sich insbesondere wiederum vorteilhaft auf die Alterungsstabilität der erfindungsgemäßen Bahn auswirkt.

Vorzugsweise ist also die das geschäumte Polymer aufweisende außenseitige Membranschichtlage der Membranschicht mit der ersten und/oder der zweiten Vliesschicht jedenfalls auch durch Verkrallung verbunden.

Die Verkrallung kann durch eine - aufgrund der geschäumten Polymerschicht hervorgerufene - verlangsamte Abkühlung bedingt werden. Auch Knetwirbel im Presswerk - die bei der Herstellung, insbesondere beim Kalandrieren, der flächigen Bahn hervorgerufen werden - können zur Verkrallung beitragen. Insbesondere dringt die geschäumte Polymerschicht in offene Poren der der geschäumten Polymerschicht zugewandten Außenseite der Vliesschicht ein, wodurch eine feste Verbindung zu den Vliesschichten ermöglicht wird.

Eine innere, ein geschäumtes Polymer aufweisende Membranschichtlage kann darüber hinaus zur Gewährleistung einer verlässlichen Nageldichtigkeit vorgesehen sein.

Vorzugsweise können die Membranschichtlagen zudem den gleichen oder einen unterschiedlichen Anteil an Additiven, insbesondere in Bezug auf die relative Additivmenge und/oder die Art bzw. das Material des Additivs bzw. der Additive, aufweisen.

Insbesondere können, etwa bei einem dreischichtigen Membranaufbau, wenigstens zwei Membranschichtlagen, bevorzugt die außenseitigen Membranschichtlagen, das zumindest im Wesentlichen gleiche bzw. identische Material, vorzugsweise TPU, mit einer unterschiedlichen Additivzugabe aufweisen. Die Additivzugabe kann sich in einer unterschiedlichen Menge bzw. Masse des Additivs - relativ bezogen auf das Volumen und/oder die Fläche der Membranschichtlage und/oder die gesamte Menge
- und/oder in einer unterschiedlichen Additivzusammensetzung zeigen bzw. widerspiegeln. Im Hinblick auf die Auswahl der Additive kann auf die zuvor bereits genannten, bevorzugten Additive verwiesen werden.

Darüber hinaus hat es sich als vorteilhaft erwiesen, wenn die Membranschicht eine Schichtdicke im Bereich von 0,01 mm bis 2,5 cm, insbesondere 0,05 mm bis 1,5 cm, vorzugsweise 0,1 mm bis 1 cm, aufweist.

Je nach Anwendung der erfindungsgemäßen flächigen Bahn kann also, insbesondere in Kombination mit der entsprechenden Ausbildung der ersten und/oder zweiten Vliesschicht, eine hochalterungsstabil und dementsprechend langzeitfunktionale Bahn mit einer je nach Bedarf dünner oder auch dicker ausgebildeten Membranschicht bereitgestellt werden, insbesondere wobei die Beständigkeit der Membranschicht wiederum auf einem synergistischen Kombinationseffekt aus Materialauswahl und -beschaffenheit sowie entsprechend abgestimmter Membranschichtdicke beruht. Jedenfalls haben sich insbesondere Membranschichten mit den vorgenannten bevorzugten Dicken im Rahmen der vorliegenden Erfindung besonders bewährt.

Für die erfindungsgemäße flächige Bahn ist es außerdem vorgesehen, dass die Membranschicht mit der ersten Vliesschicht und/oder der zweiten Vliesschicht fest verbunden, insbesondere verklebt, ist.

Folglich ist zwischen der Membranschicht und wenigstens einer der Vliesschichten eine Klebschicht bzw. Haftvermittlerschicht vorgesehen. Die Verklebung der Schichten kann während der Herstellung, insbesondere während des Extrusionskaschierprozesses, erfolgen. Vorzugsweise kann mittels der Haftvermittlerschicht bzw. der Klebschicht eine stoffschlüssige Verbindung der miteinander zu verbindenden Schichten erreicht werden.

Die Kleb- bzw. Haftvermittlerschicht kann dabei insbesondere auf der ersten Vliesschicht, der zweiten Vliesschicht und/oder der Membranschicht angeordnet sein. Erfindungsgemäß ist eine Klebschicht bzw. Haftvermittlerschicht zwischen der Membranschicht und der ersten und der zweiten Vliesschicht, insbesondere vollflächig, vorgesehen, bevorzugt zur festen sowie stoffschlüssigen Verbindung. Gleichfalls hat es sich bewährt, wenn die Klebschicht bzw. Haftvermittlerschicht zwischen der Membranschicht und der ersten und/oder der zweiten Vliesschicht teilflächig vorgesehen ist, insbesondere wobei der Kleber oder Haftvermittler vorzugsweise punktförmig, rasterförmig, rautenförmig und/oder aufgerissen aufgetragen ist. Der Auftrag des Klebers bzw. Haftvermittlers erfolgt bevorzugt mittels Düsen oder Walzen.

Die Haftvermittlerschicht ist bevorzugt fest mit der Membranschicht, der ersten Vliesschicht und/oder der zweiten Vliesschicht verbunden.

Erfindungsgemäß wird die Kleb- bzw. Haftvermittlerschicht durch einen reaktiven Polyurethan-Hotmelt-Klebstoff gebildet. Die eingesetzten reaktiven Polyurethan-Hotmelt-Klebstoffe weisen hierbei bevorzugt Polyester- und/oder Polyether-Segmente auf. Besonders gute Ergebnisse werden hierbei erhalten, wenn der Anteil der Polyether-Segmente gegenüber den Polyester-Segmenten überwiegt. Bevorzugt weist der Polyurethan-Hotmelt-Klebstoff ausschließlich Polyether-Segmente auf.

Es ist im Rahmen der vorliegenden Erfindung vorgesehen, dass die Kleb- bzw. Haftvermittlerschicht mit einem Flächengewicht von 2 bis 20 g/m², insbesondere 4 bis 15 g/m², vorzugsweise 5 bis 10 g/m², aufgebracht ist. Die Kleb- bzw. Haftvermittlerschicht kann dabei sowohl auf die Membranschicht als auch auf die Vliesschicht aufgebracht sein.

Erfindungsgemäß ist es vorgesehen, Hotmelts in der Kleb- bzw. Haftvermittlerschicht anzuwenden, wobei reaktive Hotmelts vorgesehen sind. Durch die Verwendung von Hotmelts als Haftvermittler bzw. Klebstoffe kann insbesondere die Alterungsbeständigkeit, sowie die Kälte- und Schneeresistenz der Folien positiv beeinflusst bzw. insbesondere noch weiter erhöht werden.

Weiterhin kann es im Rahmen einer weiteren bevorzugten Ausführung der vorliegenden Erfindung vorgesehen sein, dass die flächige Bahn, neben gegebenenfalls weiteren Membranschichten und/oder weiteren Vliesschichten, wenigstens eine Verstärkungsschicht aufweist.

Insbesondere kann es vorgesehen sein, dass die wenigstens eine Verstärkungsschicht zwischen der Membranschicht und der ersten und/oder der zweiten Vliesschicht angeordnet ist. Insbesondere kann jeweils eine Verstärkungsschicht zwischen der ersten Vliesschicht und der Membranschicht und zwischen der zweiten Vliesschicht und der Membranschicht angeordnet sein. Die Verstärkungsschicht kann als Drehergewebe ausgebildet sein und dient insbesondere der Erhöhung der mechanischen Stabilität der flächigen Bahn. Somit beeinflusst die Verstärkungsschicht gleichfalls auch die Dauerhaftigkeit und Alterungsstabilität der erfindungsgemäßen Bahn in vorteilhafter Weise. Weiterhin können als bevorzugte Verstärkungsschicht auch Kreuzlaminat-Gelege eingesetzt werden, besonders bevorzugt Polypropylen Kreuzlaminat-Gelege.

Vorzugsweise weist die Verstärkungsschicht einen Kunststoff und/oder ein Kunstharz, vorzugsweise ein Kunststoffpolymer, insbesondere Polypropylen und/oder Polyethylen und/oder Polyethylenterephthalat (PET), auf und/oder besteht daraus.

Als Drehergewebe werden transparente und/oder luftdurchlässige Gewebe bezeichnet, die sich durch besondere Kettfäden auszeichnen. Die Kettfäden bilden die sogenannten Dreher-Einheiten, bei denen sich ein Grund- und ein Schlingfaden aus der Kette miteinander verdrehen. Dabei wechseln sich der Einschluss des Schusses und die Verdrehung der beiden Kettfäden miteinander ab. Bei einem sogenannten Volldreher ist zwischen den Schussfäden eine komplette Drehung der Kettfäden hervorgerufen, bei einem Halbdreher kommt es zu einer einfachen Verkreuzung. Das Gewebe weist insbesondere ein geringes Flächengewicht auf. Durch das Festumschließen der Schussfäden von den beiden Kettfäden kann eine Schiebefestigkeit gewährleistet werden.

Was über die erfindungsgemäß vorgesehene hohe Alterungsstabilität der erfindungsgemäßen Bahn die weiteren Eigenschaften der Bahn anbelangt, so wird es zunächst besonders bevorzugt, wenn die Bahn wasserdampfdurchlässig, diffusionsoffen, winddicht, regensicher und/oder wasserabweisend und/oder wasserdicht ausgebildet ist, insbesondere wobei die Bahn einen S_{d}-Wert von kleiner oder gleich 0,5 m, insbesondere von 0,008 m bis 0,5 m, vorzugsweise von 0,009 m bis 0,2 m, bevorzugt von 0,01 m bis 0,1 m, aufweist.

Der S_{d}-Wert gibt dabei die wasserdampfdiffusionsäquivalente Luftschichtdicke an und ist ein bauphysikalisches Maß für den Wasserdampfdiffusionswiderstand eines Bauteils oder einer Bauteilschicht. Über den S_{d}-Wert kann die Dampfdurchlässigkeit eines Baustoffs beurteilt werden. Der Wasserdampfdiffusionswiderstand wird anschaulich durch die Dicke einer Luftschicht beschrieben, die notwendig ist, so dass die Luftschicht im stationären Zustand unter denselben Bedingungen von demselben Diffusionsstrom - wie das betrachtete Bauteil - durchströmt wird. Die flächige Bahn ist insbesondere diffusionsoffen ausgebildet, wobei die Diffusionsoffenheit durch einen S_{d}-Wert von kleiner oder gleich 0,5 m charakterisiert ist.

Die Regendichtigkeit und/oder Wasserdampfdurchlässigkeit der Bahn kann insbesondere durch die diffusionsoffene Beschaffenheit der Membranschicht gewährleistet werden. Die Membranschicht ist also vorzugsweise derart ausgebildet, dass die flächige Bahn im Gesamten wasserdampfdurchlässig und/oder diffusionsoffen und/oder wasserdicht, insbesondere wasserdampfdurchlässig und wasserdicht, ausgebildet ist.

Dabei weisen erfindungsgemäße Bahnen vorteilhaft ein Flächengewicht von 100 bis 400 g/m², insbesondere 120 bis 300 g/m², vorzugsweise 140 bis 200 g/m², auf.

Weiterhin ist es im Hinblick auf die mechanischen Eigenschaften erfindungsgemäßer Bahnen vorzugsweise vorgesehen, dass die spezifische Reißkraft der Bahn mindestens 190 N/5 cm in Maschinenrichtung und/oder mindestens 135 N/5 cm in Querrichtung, vorzugsweise 195 N/5 cm in Maschinenrichtung und/oder mindestens 140 N/5 cm in Querrichtung, bevorzugt mindestens 198 N/5 cm in Maschinenrichtung und/oder mindestens 143 N/5 cm in Querrichtung, besonders bevorzugt mindestens 200 N/5 cm in Maschinenrichtung und/oder mindestens 145 N/5 cm in Querrichtung. Die spezifische Reißkraft wird dabei gemessen nach EN 12311-1.

Weiter vorteilhaft beträgt die spezifische Reißdehnung der Bahn mindestens 25 % in Maschinenrichtung und/oder mindestens 50 % in Querrichtung, insbesondere mindestens 30 % in Maschinenrichtung und/oder mindestens 55 % in Querrichtung, vorzugsweise mindestens 33 % in Maschinenrichtung und/oder mindestens 58 % in Querrichtung, bevorzugt mindestens 35 % in Maschinenrichtung und/oder mindestens 60 % in Querrichtung.

Außerdem kann die Reißfestigkeit der flächigen Bahn größer als 50 N/mm ausgebildet sein. Bevorzugt liegt die Reißfestigkeit der Bahn zwischen 50 N/mm bis 600 N/mm, weiter bevorzugt zwischen 100 N/mm bis 400 N/mm. Die Reißfestigkeit der Bahn kann der benötigten Kraft bis zur Rissbildung und/oder Rissausdehnung entsprechen. Die Reißfestigkeit ist insbesondere gemessen gemäß dem technischen Standard der ASTM International; und zwar der ASTM D1004 (Stand September 2018) und der ASTM D1925 (Stand September 2018).

Vorzugsweise ist die Weiterreißfestigkeit der flächigen Bahn größer als 50 N/mm. Bevorzugt liegt die Weiterreißfestigkeit zwischen 50 N/mm und 500 N/mm, weiter bevorzugt zwischen 100 N/mm bis 300 N/mm. Die Weiterreißfestigkeit ist eine physikalische Größe, die eine Materialeigenschaft sowie den Einsatzbereich der Bahn kennzeichnet. Die Weiterreißfestigkeit kann auch als Kerbfestigkeit bezeichnet werden. Die Weiterreißfestigkeit gibt den Widerstand eines Materials - im vorliegenden Falle der flächigen Bahn - an, nach dem Einschneiden oder Einkerben nicht weiter zu reißen. Je höher der ermittelte Wert der Weiterreißfestigkeit ist, desto widerstandfähiger ist der geprüfte Stoff gegen das Weiterreißen. Demgegenüber ist es bei einem niedrigeren Wert so, dass die Weiterreißfestigkeit des Materials umso geringer ist. Die Weiterreißfestigkeit schließt sich folglich messtechnisch an die Messung der Reißfestigkeit an.

Sowohl die Reißfestigkeit als auch die Weiterreißfestigkeit kann richtungsabhängig ausgebildet sein, insbesondere in Abhängigkeit der Faserrichtung (Maschinenrichtung und Querrichtung). Die vorgenannten Reißfestigkeiten gelten insbesondere für die Maschinenrichtung und/oder Querrichtung.

Dabei bezeichnet die Maschinenrichtung die Richtung, in der das Vlies bei seiner Herstellung in der bzw. durch die Maschine transportiert worden ist, also regelmäßig die Längenrichtung einer Vliesbahn. Die Querrichtung, in der sich das Vlies flächig ausdehnt, bezeichnet die Richtung, die rechtwinklig zu der Maschinenrichtung liegt, also regelmäßig die in der Breite einer Vliesbahn liegende Richtung.

Es zeigen die Figurendarstellungen gemäß
- Fig. 1: schematisch eine erfindungsgemäße flächige Bahn als Querschnittsansicht;
- Fig. 2: schematisch eine weitere erfindungsgemäße flächige Bahn mit zweilagiger Membranschicht als Querschnittsansicht;
- Fig. 3: schematisch eine weitere erfindungsgemäße flächige Bahn mit dreilagiger Membranschicht als Querschnittsansicht;
- Fig. 4: schematisch eine weitere erfindungsgemäße flächige Bahn mit einer zusätzlichen Haftvermittlerschicht als Querschnittsansicht;
- Fig. 5: schematisch eine weitere erfindungsgemäße flächige Bahn mit einer zusätzlichen Haftvermittlerschicht als Querschnittsansicht;
- Fig. 6: schematisch eine weitere erfindungsgemäße flächige Bahn mit einer zusätzlichen Haftvermittlerschicht als Querschnittsansicht;
- Fig. 7: schematisch eine weitere erfindungsgemäße flächige Bahn mit einer zusätzlichen Verstärkungsschicht als Querschnittsansicht;
- Fig. 8: schematisch eine im Rahmen der vorliegenden Erfindung vorzugsweise verwendete Monokomponentenfaser als Querschnittsansicht;
- Fig. 9: schematisch eine im Rahmen der vorliegenden Erfindung vorzugsweise verwendete Bikomponentenfaser als Querschnittsansicht;
- Fig. 10: schematisch eine im Rahmen der vorliegenden Erfindung vorzugsweise verwendete Bikomponentenfaser als Querschnittsansicht;
- Fig. 11: schematisch eine im Rahmen der vorliegenden Erfindung vorzugsweise verwendete Bikomponentenfaser als Querschnittsansicht;
- Fig. 12: schematisch einen Teil eines im Rahmen der vorliegenden Erfindung vorzugsweise verwendeten Spinnfaservlieses als Querschnittsansicht;

Weiterer Gegenstand der vorliegenden Erfindung - gemäß einem **zweiten** Aspekt der vorliegenden Erfindung - ist die Verwendung einer hochalterungsstabilen flächigen Bahn, wie zuvor geschildert, im Baubereich, insbesondere als Unterspannbahn, Unterdeckbahn und/oder Schalungsbahn in einer Dachkonstruktion und/oder Fassadenbahn in einer Wandkonstruktion.

Für weitergehende Einzelheiten zu diesem Erfindungsaspekt kann auf die obigen Ausführungen zu erfindungsgemäßen hochalterungsstabilen flächigen Bahnen verwiesen werden, welche in Bezug auf die erfindungsgemäße Verwendung entsprechend gelten.

Zudem weiterer Gegenstand der vorliegenden Erfindung - gemäß einem **dritten** Aspekt der vorliegenden Erfindung - ist ein Verfahren zur Herstellung einer hochalterungsstabilen flächigen Bahn für den Baubereich wie zuvor beschrieben, aufweisend einen mehrschichtigen Aufbau umfassend mindestens eine erste Vliesschicht und eine zweite Vliesschicht sowie mindestens eine zwischen den Vliesschichten angeordnete Membranschicht, wobei die Bahn eine Alterungsstabilität von mindestens 15 Jahren aufweist, wobei die mindestens eine Membranschicht zwischen die mindestens erste und zweite Vliesschicht extrudiert wird, und die Membran- und Vliesschichten unmittelbar anschließend laminiert werden, wobei die Haftvermittlerschichten auf die Vliesschichten aufgebracht werden und wobei die Extrusion der Membranschicht dann auf die auf die Vliesschichten aufgebrachten Haftvermittlerschichten erfolgt.

Ein besonderer Vorteil des erfindungsgemäßen Verfahrens besteht dabei darin, dass durch die unmittelbare Abfolge von Extrusion der Membranschicht zwischen die Vliesschichten und Laminierung der Schichten miteinander ein besonders inniger Verbund der Schichten erreicht werden kann, was insbesondere für die hohe Alterungsstabilität erfindungsgemäßer Bahnen von besonderem Vorteil ist.

Gleichfalls ist es auf Basis der erfindungsgemäßen Verfahrensführung in vorteilhafter Weise möglich, besonders zeit- und kosteneffizient zu produzieren, indem Verfahrensschritte, die üblicherweise in mehreren Prozessschritten und/oder örtlich getrennt, d.h. auf unterschiedlichen Vorrichtungen, durchgeführt werden, zu einem Schritt zusammengefasst werden.

In diesem Sinne ist es im Rahmen der vorliegenden Erfindung also vorzugsweise vorgesehen, dass alle Schritte im Rahmen der Herstellung der Bahnen möglichst konzertiert bzw. insbesondere zumindest unmittelbar aufeinander folgend ablaufen.

Erfindungsgemäß wird es dabei bevorzugt, wenn die Membranschicht, insbesondere Form einer monolithischen Membran, vorzugsweise aufweisen thermoplastisches Polyurethan, direkt auf die Vliesschichten aufextrudiert bzw. zwischen die Vliesschichten extrudiert wird. Gleichfalls hat es sich als vorteilhaft erwiesen, wenn zwischen den Vliesschichten und der Membranschicht eine Klebschicht bzw. Haftvermittlerschicht vorgesehen ist. Die Klebschicht bzw. Haftvermittlerschicht kann hierbei vollflächig oder teilflächig aufgetragen werden.

Wenn die erfindungsgemäße Bahn eine Klebschicht bzw. Haftvermittlerschicht aufweist, so ist es erfindungsgemäß vorzugsweise vorgesehen, dass die Klebschicht bzw. Haftvermittlerschicht mittels Düsen und/oder Walzen aufgebracht wird. Die Verwendung einer Düsen- und/oder Walzenanordnung erlaubt insbesondere einen regelmäßigen sowie gleichförmigen Auftrag des Klebers bzw. Haftvermittlers.

Speziell wenn ein teilflächiger Auftrag des Klebers bzw. Haftvermittlers gewünscht ist, hat es sich bewährt, wenn der Kleber oder Haftvermittler punktförmig, rasterförmig, rautenförmig und/oder aufgerissen aufgetragen wird. Für einen teilflächigen Auftrag des Klebers bzw. Haftvermittlers, insbesondere entsprechend den vorgenannten Auftragsmustern, haben sich dabei insbesondere Breitschlitzdüsen und/oder gravierte Beschichtungswalzen als geeignet erwiesen.

Generell ist es möglich, dass die Klebschicht bzw. Haftvermittlerschicht auf die Vliesschicht und/oder die Membranschicht aufgetragen wird. Erfindungsgemäß hat es sich diesbez. bewährt, dass die Klebschicht bzw. Haftvermittlerschicht auf die Vliesschichten aufgebracht wird, wobei die Extrusion der Membranschicht dann auf die auf die Vliesschichten aufgebrachten Klebschichten bzw. Haftvermittlerschichten erfolgt.

Indem der Auftrag der Klebschicht bzw. Haftvermittlerschicht bevorzugt unmittelbar vor der Extrusion der Membranschicht auf die Klebschicht bzw. Haftvermittlerschicht erfolgt, kann eine optimale Kleb- bzw. Haftwirkung zwischen den Schichten erzielt werden, insbesondere da sich die Laminierung der Schichten möglichst direkt anschließt. Hierdurch zeichnen sich erfindungsgemäße Bahnen letztlich insbesondere durch eine besonders hohe Verbundhaftung aus. Diese trägt gleichfalls zu der hohen Stabilität erfindungsgemäßer Bahnen gegenüber Witterung, Hydrolyse sowie im Allgemeinen Alterungserscheinungen bei.

Weiterhin ist es im Rahmen des erfindungsgemäßen Verfahrens auch möglich, eine Verstärkungsschicht zu integrieren, welche ebenfalls im Rahmen des erfindungsgemäßen Verfahrens in die Bahn eingebracht werden kann.

Für weitergehende Einzelheiten zu dem erfindungsgemäßen Herstellungsverfahren kann auf die obigen Ausführungen zu den übrigen Aspekten der vorliegenden Erfindung verwiesen werden, welche in Bezug auf das erfindungsgemäße Verfahren entsprechend gelten.

Der Gegenstand der vorliegenden Erfindung wird nachfolgend anhand bevorzugter Ausführungsformen durch die Figurendarstellung sowie anhand von Ausführungsbeispielen in nicht beschränkender Weise weiter erläutert.

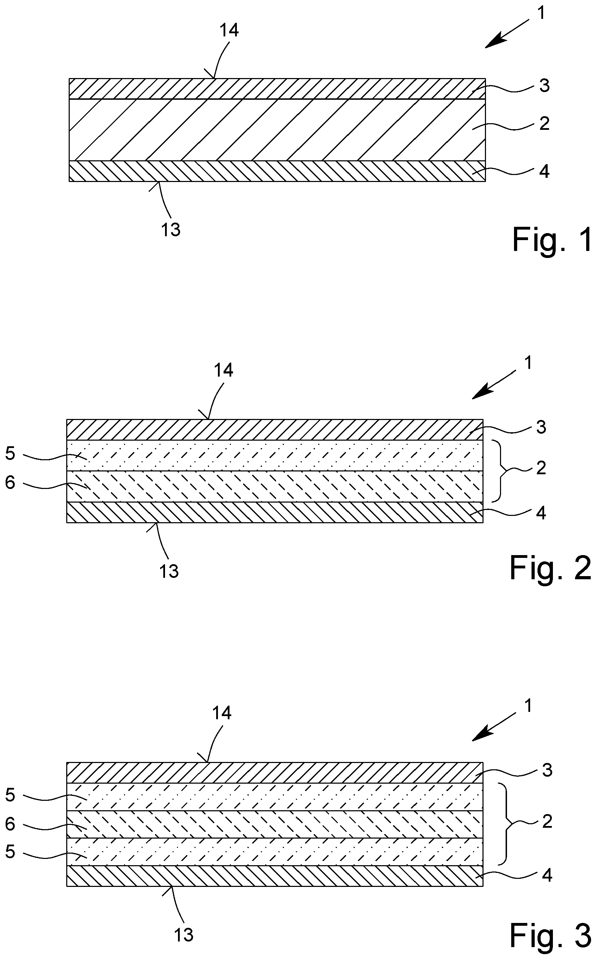

Es zeigt Fig. 1 eine schematische Querschnittsdarstellung einer erfindungsgemäßen hochalterungsstabilen flächigen Bahn 1, umfassend eine erste Vliesschicht 3 und eine zweite Vliesschicht 4 sowie dazwischen angeordnet eine Membranschicht 2. Die Bahn 1 weist einen Alterungsstabilität von mindestens 15 Jahren auf. Die Alterungsstabilität der Bahn 1 ist bestimmt bzw. bestätigt, indem die Bahn einem künstlichen Alterungsprozess unterzogen wird. Dieser künstliche Alterungsprozess wird bei einer Temperatur von 70±2 °C und einer Luftgeschwindigkeit von 5±2 m/s durchgeführt. Im Anschluss an den künstlichen Alterungsprozess wird die Wasserdichtigkeit der Bahn 1 nach DIN EN 13859-1-2010-11, Abschnitt 5.2.3, gegenüber einer Wassersäule von wenigstens 200 mm über einen Zeitraum von 2 h geprüft.

Auf Grundlage dieser Vorgehensweise kann eine effiziente sowie zuverlässige Simulation des Alterungsverhaltens der Bahn 1 erreicht werden, auf deren Grundlage sicher bestätigt ist, dass die Bahn 1 die angestrebte Alterungsstabilität von mindestens 15 Jahren im Anwendungsfall verlässlich und nachweislich aufweist.

Bevorzugter Weise kann die Altersstabilität der Bahn 1 auch noch höher sein und insbesondere mindestens 20 Jahre, vorzugsweise mindestens 25 Jahre, betragen. Besondere bevorzugte Ausführungen der erfindungsgemäßen Bahn 1 weisen schließlich eine Alterungsstabilität in einem Bereich von 15 bis 75 Jahren, insbesondere 20 bis 60 Jahren, vorzugsweise 25 bis 50 Jahren, auf.

Der künstliche Alterungsprozess zur Bestimmung bzw. Bestätigung der vorgenannten angestrebten Alterungsstabilitäten kann diesbez. über einen Zeitraum von mindestens 36 Wochen durchgeführt sein. Dabei hat sich im Rahmen der vorliegenden Erfindung insbesondere herausgestellt, dass die Bahn 1 in dem künstlichen Alterungsprozess, d.h. insbesondere unter den vorgenannten Prozessbedingungen, in einer Woche um 4 bis 5 Monate, insbesondere um 4,5 Monate, altert. Alternativ kann auch davon ausgegangen werden, die Bahn in dem künstlichen Alterungsprozess in 2 bis 3 Wochen, insbesondere in 2,5 Wochen, um ein Jahr altert.

Dementsprechend ist die Dauer der Durchführung des Alterungsprozesses in Wochen vorzugsweise in Abhängigkeit von der angestrebten Alterungsstabilität der Bahn in Jahren bestimmt bzw. richtet sich die Dauer, über welche die Bahn 1 den künstlichen Alterungsbedingungen ausgesetzt wird, vorzugsweise nach der angestrebten Alterungsstabilität entsprechend den vorgenannten Korrelationen.

In diesem Sinne hat es sich für Bahnen 1, die eine höhere Alterungsstabilität von mindestens 20 Jahren bzw. insbesondere mindesten 25 Jahren aufweisen, als zweckmäßig erwiesen, wenn derartige Bahnen 1 den künstlichen Alterungsbedingungen, d.h. einer Temperatur von 70±2 °C und einer Luftgeschwindigkeit von 5±2 m/s, über eine Dauer von mindestens 40 bzw. insbesondere mindestens 50 Wochen, vorzugsweise mindesten 48 bzw. insbesondere mindestens 60 Wochen, ausgesetzt werden, bevor im Anschluss die Wasserdichtigkeit der Bahnen 1 geprüft bzw. bestätigt wird.

Bezogen auf den Anwendungsfall im Baubereich, d.h. bspw. insbesondere als Unterspannbahn, Unterdeckbahn und/oder Schalungsbahn in einer Dachkonstruktion und/oder Fassadenbahn in einer Wandkonstruktion, kann die Oberseite 14 der Bahn durch die erste Vliesschicht 3 und die Unterseite 13 durch die zweite Vliesschicht 4 gebildet sein.

Was die Beschaffenheit der ersten Vliesschicht 3 und/oder der zweiten Vliesschicht 4 anbelangt, so hat es sich erfindungsgemäß bewährt, wenn die erste Vliesschicht 3 und/oder die zweite Vliesschicht 4 außenliegend angeordnet ist. Das heißt, dass es im Rahmen der vorliegenden Erfindung bevorzugt wird, wenn mindestens eine der Vliesschichten 3 oder 4, insbesondere beide Vliesschichten 3 und 4, die äußeren Oberflächen der Bahn 1 bilden.

Weiterhin werden im Rahmen der vorliegenden Erfindung gute Ergebnisse erhalten, wenn die erste Vliesschicht 3 und/oder die zweite Vliesschicht 4 als Spinnvlies und/oder als Nadelvlies ausgebildet ist. Die erste Vliesschicht 3 und/oder die zweite Vliesschicht 4 können dabei insbesondere sowohl identisch zueinander als auch unterschiedlich voneinander ausgebildet sein, insbesondere etwa im Hinblick auf die Grammatur und/oder das Flächengewicht, die Materialzusammensetzung und/oder die Ausbildung von Vlies bzw. Faser im Vlies. Eine identische Ausbildung der Vliesschichten 3 und 4 meint dabei, dass die Vliesschichten bzw. umfassten Vliese gleiche Oberflächeneigenschaften, das gleiche Material und/oder die gleiche Materialzusammensetzung und/oder die gleiche Grammatur aufweisen.

Die im Rahmen der vorliegenden Erfindung verwendeten Vliesschichten bzw. umfassten Vliese eignen sich für erfindungsgemäße Bahnen 1 in vorteilhafter Weise, wenn das Flächengewicht bzw. die Grammatur der ersten und/oder zweiten Vliesschicht 3 bzw. 4 zwischen 10 g/m² und 150 g/m², vorzugsweise 20 g/m² bis 120 g/m², bevorzugt 30 g/m² und 100 g/m², liegt.

Die erste Vliesschicht 3 und/oder zweite Vliesschicht 4 sind üblicherweise aus Fasern gebildet, insbesondere bspw. Endlosfasern, sofern die erste und/oder zweite Vliesschicht 3 bzw. 4 in Form eines Spinnvlieses vorliegt.

Im Hinblick auf die Beschaffenheit der Fasern hat es sich dabei bewährt, wenn der Durchmesser der Faser zwischen 1 µm und 50 µm, bevorzugt zwischen 5 µm und 30 µm, besonders bevorzugt zwischen 8 µm und 20 µm. Neben der Faserdicke beeinflusst darüber hinaus insbesondere auch die Materialwahl bzw. Beschaffenheit der Komponenten, aus welchen die Faser gebildet ist, die Eigenschaften der Faser und somit des resultierenden Vlieses.

Die Fasern weisen hierbei eine Komponente auf, insbesondere wobei gute Ergebnisse erhalten werden, wenn die eine Faserkomponente ausgewählt ist aus thermoplastischen Kunststoffen, insbesondere aus der Gruppe von Polyolefinen, Polyestern, Polyamiden und/oder thermoplastischen Polyurethanen, vorzugsweise aus der Gruppe von Polyolefinen, Polyestern, und/oder thermoplastischen Polyurethanen.

Für den Fall, dass der thermoplastische Kunststoff aus der Gruppe der Polyolefine ausgewählt ist, hat es sich dabei insbesondere bewährt, wenn das Polyolefin ausgewählt ist aus der Gruppe der Polyolefin-Homopolymere, insbesondere aus Polyethylen, Polypropylen, Polybutylen, Polyhexylen, vorzugsweise Polyethylen, Polypropylen, der Gruppe der Polyolefin-Copolymere, insbesondere aus Ethylen-Copolymeren, Propylen-Copolymeren, Butylen-Copolymeren, Hexylen-Copolymeren. Ganz besonders bevorzugt wird es dabei im Rahmen der vorliegenden Erfindung, wenn das Polyolefin ausgewählt ist aus Polyethylen, Polypropylen, Ethylen-Copolymeren, Propylen-Copolymeren, und deren Mischungen bzw. Blends.

Es hat sich gleichfalls als vorteilhaft erwiesen, wenn der thermoplastische Kunststoff aus der Gruppe der Polyester ausgewählt ist aus Polyethylenterephthalat, Polybutylenterephthalat, Polytrimethylenterephthalat, Polyethylenfuranoat, deren Copolymeren und deren Mischungen bzw. Blends, insbesondere Polyethylenterephthalat, Polybutylenterephthalat, Polyethylenfuranoat, deren Copolymeren und deren Mischungen bzw. Blends, vorzugsweise Polyethylenterephthalat, Polyethylenfuranoat, deren Copolymeren und deren Mischungen bzw. Blends.

Nicht zuletzt werden im Rahmen der vorliegenden Erfindung gute Ergebnisse erhalten, wenn der thermoplastische Kunststoff aus der Gruppe der thermoplastischen Polyurethane ausgewählt ist aus der Gruppe der aliphatischen und/oder aromatischen Polyurethane, insbesondere des Ether-Typs, des Ester-Typs, des Carbonat-Typs und deren Mischungen bzw. Blends, insbesondere der aliphatischen und/oder aromatischen Polyurethane des Ether-Typs, Ester-Typs und deren Mischungen bzw. Blends, vorzugsweise der aliphatischen und/oder aromatischen Polyurethane des Ether-Typs.

Darüber hinaus kann es vorteilhaft sein, wenn die Faserkomponente Polymere aus nachwachsenden Rohstoffen aufweist, insbesondere etwa Polylactid.

Zur weiteren Verbesserung der Eigenschaften der Faser und somit der Eigenschaften der ersten und/oder zweiten Vliesschicht 3 bzw. 4 können den Faserkomponenten bzw. insbesondere den thermoplastischen Kunststoffen Additive zugesetzt werden. Diese Additive können aus den verschiedensten Stoffen ausgewählt sein und beispielsweise zur Färbung, zur Thermostabilisation, zur Flammhemmung, zur Hydrophilierung oder Hydrophobierung oder zur UV-Stabilisation des thermoplastischen Kunststoffes bzw. der Faser insgesamt dienen.

Dabei ist es generell vorgesehen, dass die Additive regelmäßig bzw. gleichmäßig in der Faser, insbesondere der polymeren Phase des thermoplastischen Kunststoffes, verteilt sind. In diesem Sinne können Additive auch als Zusatzstoffe verstanden werden, die der Faser bzw. insbesondere dem Kunststoff zugefügt werden, um die Eigenschaften der Faser bzw. des aus der Faser gewonnenen Spinnvlieses zu modifizieren bzw. zu verbessern. Hierbei hat es sich als vorteilhaft erwiesen, wenn es sich bei dem Additiv um ein primäres oder sekundäres Antioxidanz, einen UV-Absorber, einen UV-Stabilisator, einen Flammhemmer, ein Antistatikum, ein Gleitmittel, einen Metalldesaktivator, ein Hydrophilierungsmittel, ein Hydrophobierungsmittel, ein Antifogging-Additiv und/oder ein Biozid handelt.

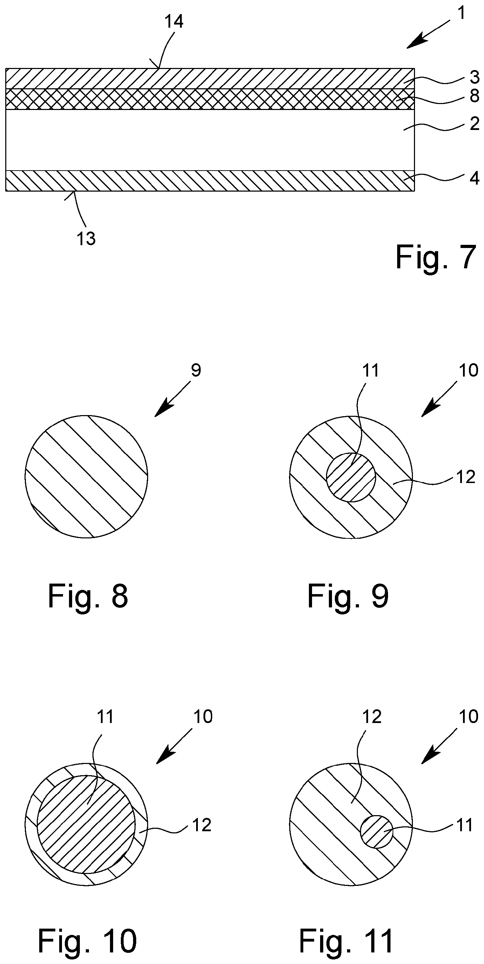

In Bezug auf die Beschaffenheit der ersten Vliesschicht 3 und/oder der zweiten Vliesschicht 4 ist es für erfindungsgemäße Bahnen 1 vorgesehen, dass die erste Vliesschicht 3 und die zweite Vliesschicht 4 als Monokomponentenfaservlies ausgebildet ist. Diese Ausführung der erfindungsgemäßen Bahn 1 ist im Rahmen der vorliegenden ganz besonders bevorzugt. Monokomponentenfasern 9, wie schematisch in Fig. 8 dargestellt, erlauben einen kostengünstigen sowie gleichfalls zuverlässig belastbaren und dauerhaften Aufbau der Bahn 1.

Im Rahmen einer ganz besonders bevorzugten Ausführungsform der vorliegenden Erfindung kann es dabei vorgesehen sein, dass das Monokomponentenfaservlies Fasern aus einer Komponente enthaltend ein Polymer, insbesondere einen thermoplastischen Kunststoff, vorzugsweise ausgewählt aus der Gruppe der Polyolefine, bevorzugt aus Polypropylen oder Propylen-Copolymeren, aufweist, insbesondere wobei das Polymer, insbesondere der thermoplastische Kunststoff, Additive aufweist.

Derartig beschaffene Monokomponentenfaservliese haben sich als besonders geeignet für die erste und/oder zweite Vliesschicht 3 und 4 erfindungsgemäßer Bahnen 1 erwiesen. Die Vliese zeichnen sich durch eine hohe Haltbarkeit sowie Resistenz gegenüber umweltbedingten Einflüssen aus. Insbesondere wurde für derartig beschaffene, bevorzugte Vliese festgestellt, dass diese auch in Gegenwart konstanter Luftbewegung sowohl ihre mechanische Festigkeit und Widerstandsfähigkeit als auch die strukturelle Integrität über einen Zeitraum von mehreren Jahren bzw. Jahrzehnten behalten.

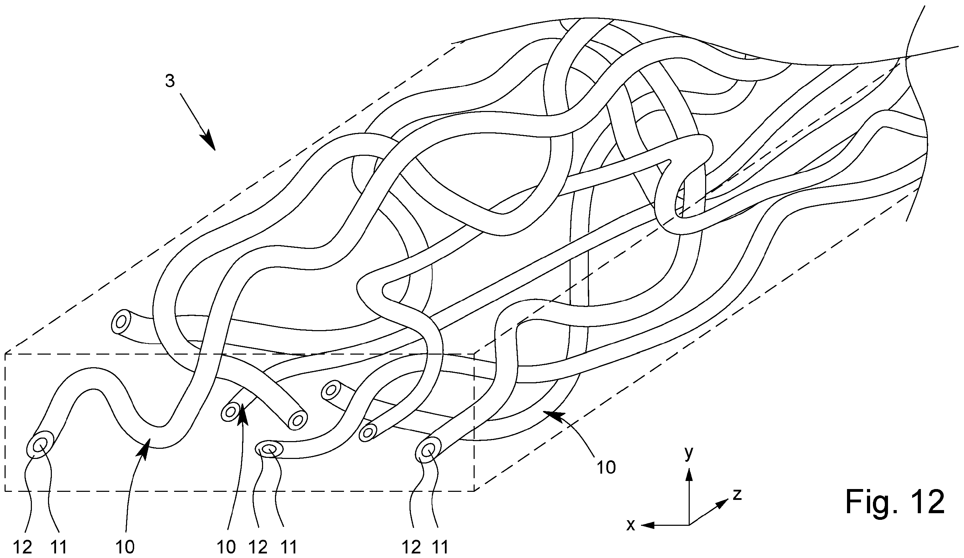

Im Rahmen einer alternativen, nicht erfindungsgemäßen Ausführungsform kann es jedoch auch vorgesehen sein, dass die erste Vliesschicht 3 und/oder die zweite Vliesschicht 4 als Bikomponentenfaservlies ausgebildet ist. Eine schematische Darstellung einer entsprechenden beispielhaften Vliesschicht 3 ist dabei der Fig. 12 zu entnehmen.

Wenn die erste Vliesschicht 3 und/oder die zweite Vliesschicht 4 als Bikomponentenfaservlies ausgebildet ist, so ist es üblicherweise vorgesehen, dass das Bikomponentenfaservlies aus Bikomponentenfasern 10 gebildet ist, insbesondere wobei die Bikomponentenfaser 10 üblicherweise eine erste Komponente 12 aus einem ersten Polymer und eine zweite Komponente 11 aus einem zweiten Polymer aufweist. Vorzugsweise ist die erste und/oder zweite Komponente 11 bzw. 12 dabei ausgewählt aus thermoplastischen Polymeren.

Es kann zwischen unterschiedlichen Typen von Bikomponentenfasern 10 unterschieden werden, die jeweils unterschiedliche charakteristische Verteilungen der Komponenten im Faserquerschnitt aufweisen. Bikomponentenfasern 10, bei denen die erste Komponente 12 die zweite Komponente 11 im Querschnitt der Faser umgibt und somit einschließt, werden als Kern-Mantel-Fasern bezeichnet und sind schematisch in den Fig. 9 bis 11 abgebildet.

Was nun die Membranschicht 2 der erfindungsgemäßen flächigen Bahn 1 anbelangt, so ist es erfindungsgemäß für diese bevorzugt, wenn die Membranschicht 2 wasserdicht und wasserdampfdurchlässig ausgebildet ist. Weiterhin ist die Membranschicht 2 als monolithische Membranschicht ausgebildet.

In Bezug auf die Zusammensetzung bzw. den Aufbau der Membranschicht 2 ist es erfindungsgemäß vorgesehen, dass die Membranschicht 2 ein thermoplastisches Elastomer, insbesondere ausgewählt aus der Gruppe von thermoplastischen Polyurethanen und/oder thermoplastischen Copolyestern (TPEE), aufweist.

Wenn das thermoplastische Elastomer aus der Gruppe von thermoplastischen Polyurethanen ausgewählt ist, so hat es sich weiterhin bewährt, wenn das thermoplastische Polyurethan ausgewählt ist aus der Gruppe der aliphatischen und/oder aromatischen Polyurethane, insbesondere des Ether-Typs, des Ester-Typs, des Carbonat-Typs und deren Mischungen bzw. Blends, insbesondere der aliphatischen und/oder aromatischen Polyurethane des Ether-Typs, Ester-Typs und deren Mischungen bzw. Blends, vorzugsweise der aliphatischen und/oder aromatischen Polyurethane des Ether-Typs.

Weiter ist es im Rahmen einer bevorzugten Ausführungsform vorgesehen, dass das Material der Membranschicht 2, insbesondere das thermoplastische Polyurethan, einen Anteil von wenigstens 10 %, bevorzugt von 15% bis 100 %, weiter bevorzugt von 20 % bis 70 %, an aus nachwachsenden Rohstoffen stammendem Material aufweist.

Weiterhin kann es sich auch auf die Eigenschaften der Membranschicht 2 vorteilhaft auswirken, wenn dieser die Additive, zugesetzt werden. Ebenso wie im Falle der Fasern der Vliesschichten 3 und 4 kann auch die Membranschicht 2 durch den Zusatz ausgewählter Additive insbesondere gegenüber externen Umwelteinflüssen stabilisiert und so alterungsbeständiger eingestellt werden.

Gute Ergebnisse werden erfindungsgemäß außerdem erhalten, wenn die Membranschicht 2 ein Flächengewicht im Bereich von 10 bis 150 g/m², insbesondere von 15 bis 100 g/m², vorzugsweise 18 bis 80 g/m², bevorzugt 20 bis 50 g/m²aufweist. Gleichfalls kann es im Rahmen einer bevorzugten alternativen Ausführung der vorliegenden Erfindung auch vorgesehen sein, dass die Membranschicht 2 eine Grammatur bzw. ein Flächengewicht von kleiner als 100 g/m² aufweist. Insbesondere kann das Flächengewicht zwischen 1 bis 70 g/m², weiter bevorzugt zwischen 3 bis 40 g/m², besonders bevorzugt zwischen 4 bis 30 g/m² und insbesondere zwischen 5 bis 25 g/m², liegen.

Wie in den Fig. 2 und 3 schematisch gezeigt, ist es im Rahmen einer besonders bevorzugten Ausführungsform der vorliegenden Erfindung vorgesehen, dass die Membranschicht 2 wenigstens zwei Lagen 5 und 6 von Membranschichtlagen aufweist. Diese Membranschichtlagen 5 und 6 können dabei unterschiedlich ausgebildet sein oder aber die wenigstens zwei Membranschichtlagen 5 und 6 können zumindest im Wesentlichen identisch ausgebildet sein.

Insbesondere kann es etwa bei einem wie in Fig. 3 dargestellten dreilagigen Aufbau der Membranschicht 2 vorgesehen sein, dass die äußeren Membranschichtlagen 5, die eine mittige Membranschichtlage 6 einfassen, zumindest im Wesentlichen identisch ausgebildet sind. Unter einer identischen Ausbildung ist insbesondere zu verstehen, dass die Membranschichtlagen gleiche Oberflächeneigenschaften und/oder das gleiche Material und/oder die gleiche Materialzusammensetzung aufweisen. Letztlich können die identischen Membranschichtlagen auch funktionsgleich ausgebildet sein. Beispielsweise können sich die Flächengewichte der identisch ausgebildeten Membranschichtlagen etwa um weniger als 5 g/m² voneinander unterscheiden.

Im Rahmen einer ganz besonders bevorzugten Ausführungsform der vorliegenden Erfindung kann es vorgesehen sein, dass wenigstens eine Membranschichtlage 5 oder 6 der Membranschicht 2, insbesondere eine außenseitige, vorzugsweise der ersten und/oder der zweiten Vliesschicht 3 bzw. 4 zugewandte, Membranschichtlage 5, als Material thermoplastisches Copolyester (TPEE) und/oder thermoplastisches Polyurethan (TPU) aufweist und/oder daraus besteht.

Des Weiteren kann bei einer bevorzugten Ausführungsform der Erfindung die Membranschicht 5 aus TPEE-Schichten und/oder TPU-Schichten und/oder aus TPEE-Schichten sowie TPU-Schichten ausgebildet sein. Insbesondere sind die TPEE-Schichten und/oder die TPU-Schichten und/oder die Membranschichtlagen 5 bzw. 6 der Membranschicht 2 fest miteinander, insbesondere untrennbar, verbunden.

Eine monolithische TPEE-Membran ist insbesondere gut extrudierbar und auch für dünne Membranen geeignet. Insbesondere ist eine TPEE aufweisende Membranschicht für eine insbesondere mehrlagige koextrudierte Bahn geeignet und aus technischer Sicht sinnvoll. TPU ist darüber hinaus insbesondere intrinsisch flammenhemmend und weist ein gutes Langzeitalterungsverhalten auf, vorzugsweise für Standzeiten von größer als 10 Jahre.

Vorzugsweise können die Membranschichtlagen 5 bzw. 6 zudem den gleichen oder einen unterschiedlichen Anteil an Additiven, insbesondere in Bezug auf die relative Additivmenge und/oder die Art bzw. das Material des Additivs bzw. der Additive, aufweisen. Insbesondere können, etwa bei einem dreischichtigen Membranaufbau, wenigstens zwei Membranschichtlagen 5 bzw. 6, bevorzugt die außenseitigen Membranschichtlagen 5, das zumindest im Wesentlichen gleiche bzw. identische Material, vorzugsweise TPU, mit einer unterschiedlichen Additivzugabe aufweisen. Die Additivzugabe kann sich in einer unterschiedlichen Menge bzw. Masse des Additivs - relativ bezogen auf das Volumen und/oder die Fläche der Membranschichtlage 5 und/oder die gesamte Menge - und/oder in einer unterschiedlichen Additivzusammensetzung zeigen bzw. widerspiegeln.

Weiterhin hat es sich im Rahmen der vorliegenden Erfindung bewährt, wenn die Membranschicht 2 eine Schichtdicke im Bereich von 0,01 mm bis 2,5 cm, insbesondere 0,05 mm bis 1,5 cm, vorzugsweise 0,1 mm bis 1 cm, aufweist.

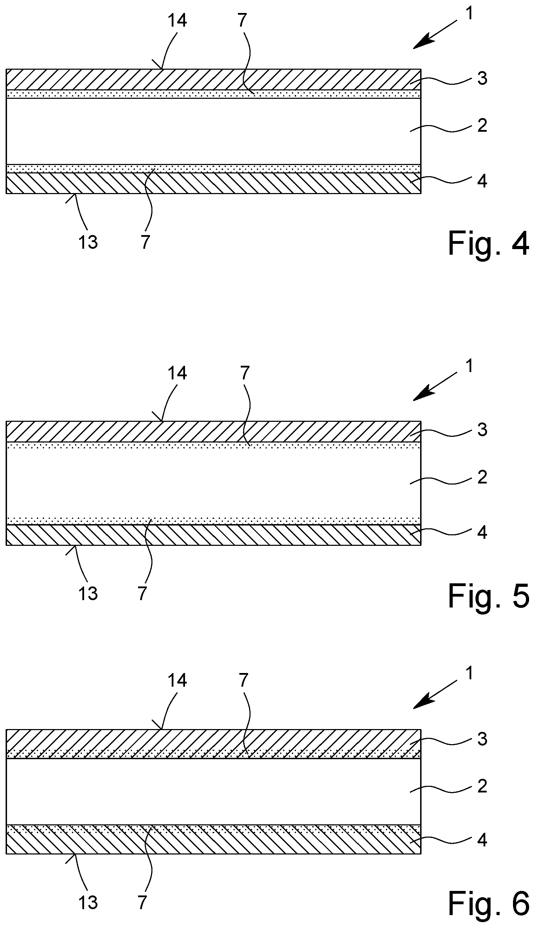

Im Rahmen der vorliegenden Erfindung ist es für die Bahn 1, entsprechend der schematischen Darstellung in Fig. 4, vorgesehen, dass die Membranschicht 2 mit der ersten Vliesschicht 3 und der zweiten Vliesschicht 4 fest verbunden, vorzugsweise verklebt, ist.

In diesem Sinne ist zwischen der Membranschicht 2 und der Vliesschichten 3 bzw. 4 eine Klebschicht bzw. Haftvermittlerschicht 7 vorgesehen sein. Die Verklebung der Schichten kann während der Herstellung, insbesondere während des Extrusionskaschierprozesses, erfolgen. Vorzugsweise kann mittels der Haftvermittlerschicht bzw. der Klebschicht 7 eine stoffschlüssige Verbindung der miteinander zu verbindenden Schichten erreicht werden.

Die Kleb- bzw. Haftvermittlerschicht 7 kann insbesondere außenseitig der ersten Vliesschicht 3, der zweiten Vliesschicht 4 und/oder der Membranschicht 2 angeordnet sein. Erfindungsgemäß ist eine Klebschicht bzw. Haftvermittlerschicht 7 zwischen der Membranschicht 2 und der ersten und der zweiten Vliesschicht 3 bzw. 4, insbesondere vollflächig, vorgesehen, bevorzugt zur festen sowie stoffschlüssigen Verbindung.

Die Kleb- bzw. Haftvermittlerschicht 7 kann ferner ein Polymer, insbesondere ein Haftvermittlerpolymer, aufweisen. Das Haftvermittlerpolymer kann dabei vorzugsweise ein Kunststoff und/oder ein Kunstharz sein, und vorzugsweise Polyurethan aufweisen. Die Haftvermittlerschicht ist bevorzugt fest mit der Membranschicht 2., der ersten Vliesschicht 3 und/oder der zweiten Vliesschicht 4 verbunden.

Durch die Haftvermittlerschicht kann eine feste Verbindung der Membranschicht 2 zu den außenseitigen Vliesschichten 3 bzw. 4 ermöglicht werden. Der Haftvermittler bzw. das Haftvermittlerpolymer ermöglicht hierbei, dass die Vliesschichten 3 und 4 mit der Membranschicht 2 dauerfest verklebt werden können.

Durch den Einbau von Funktionsmaterialien, beispielsweise von Haftvermittlerpolymeren und/oder Flammhemmern, in die als Vlies ausgebildete erste und/oder zweite Vliesschicht 3 bzw. 4 kann weiterhin ein kostengünstiger Aufbau der flächigen Bahn ermöglicht werden.

Erfindungsgemäß ist es vorgesehen, Hotmelts in der Klebe- bzw. Haftvermittlerschicht 7 anzuwenden, wobei reaktive Hotmelts verwendet werden. Durch die Verwendung von Hotmelts als Haftvermittler bzw. Klebstoffe kann insbesondere die Alterungsbeständigkeit, sowie die Kälte- und Schneeresistenz der Folien positiv beeinflusst bzw. insbesondere noch weiter erhöht werden.

Entsprechend einer weitere bevorzugten Ausführungsform der erfindungsgemäßen Bahn 1 kann es, wie in Fig. 7 dargestellt ist, vorgesehen sein, dass die Bahn 1 wenigstens eine Verstärkungsschicht 8 aufweist.

Insbesondere kann es vorgesehen sein, dass die wenigstens eine Verstärkungsschicht 8 zwischen der Membranschicht 2 und der ersten und/oder der zweiten Vliesschicht 3 bzw. 4 angeordnet ist. Insbesondere kann jeweils eine Verstärkungsschicht 8 zwischen der ersten Vliesschicht 3 und der Membranschicht 2 und zwischen der zweiten Vliesschicht 4 und der Membranschicht 2 angeordnet sein. Die Verstärkungsschicht kann als Drehergewebe ausgebildet sein und dient insbesondere der Erhöhung der mechanischen Stabilität der flächigen Bahn.

Vorzugsweise weist die Verstärkungsschicht 8 dabei einen Kunststoff und/oder ein Kunstharz, vorzugsweise ein Kunststoffpolymer, insbesondere Polypropylen und/oder Polyethylen und/oder Polyethylenterephthalat (PET), auf und/oder besteht daraus.

### Ausführungsbeispiele

### 1. Herstellung von Spinnvliesen:

### Beispiel 1 (erfindungsgemäß):

Auf einer Spinnvliesanlage der Firma Reifenhäuser vom Typ "Reicofil 3" wird ein Polypropylen (PP) -Monokomponentenfaserspinnvlies mit einem Flächengewicht von 30 g/m² hergestellt und thermisch verfestigt. Hierfür wird ein mittels Ziegler-Natta Katalysator hergestelltes PP verwendet. Außerdem wird dem PP während der Extrusion ein Additiv-Masterbatch zugesetzt. Der Masterbatch enthält eine Mischung aus einem primären und sekundären Antioxidationsmittel und einem HALS-Stabilisator ("Hindered amine light stabilizer"). Das hergestellte Spinnvlies enthält jeweils 0,1 Gew.% primäres und sekundäres Antioxidationsmittel und 0,5 Gew.% HALS-Stabilisator.

### Beispiel 2 (nicht erfindungsgemäß):

Auf einer Spinnvliesanlage der Firma Reifenhäuser vom Typ "Reicofil 4" wird ein PP-Bikomponentenfaserspinnvlies mit einer Kern-Mantelstruktur und einem Flächengewicht von 60 g/m² hergestellt und thermisch verfestigt. Hierfür wird ein mittels Ziegler-Natta Katalysator hergestelltes PP im Kern und ein mittels Metallocen-Katalysator hergestelltes PP im Mantel verwendet. Das Verhältnis Kern : Mantel beträgt 80 : 20 Gew.%. Außerdem wird dem jeweiligen PP während der Extrusion ein Additiv-Masterbatch zugesetzt. Der Masterbatch enthält eine Mischung aus einem primären und sekundären Antioxidationsmittel und einem HALS-Stabilisator. Das hergestellte Spinnvlies enthält im Kern jeweils 0,05 Gew.% primäres und sekundäres Antioxidationsmittel und 0,25 Gew.% HALS-Stabilisator, sowie im Mantel jeweils 0,2 Gew.% primäres und sekundäres Antioxidationsmittel und 1 Gew.% HALS-Stabilisator.

### 2. Mechanische Eigenschaften der Spinnvliese:

Die mechanischen Eigenschaften der Spinnvliese aus den Beispielen 1 und 2 sind in der folgenden Tabelle zusammengefasst:

**Tabelle 1: Eigenschaften der Spinnvliese aus den Bsp. 1 und 2**

| | RK MD [N/5 cm] | RK CD [N/5 cm] | RD MD [%] | RD CD [%] | NAK MD [N] | NAK CD [N] |
|---|---|---|---|---|---|---|
| Bsp. 1 | 65 | 44 | 61 | 66 | 33 | 39 |
| Bsp. 2 | 158 | 137 | 110 | 105 | 99 | 123 |

| | | | | | | |
|---|---|---|---|---|---|---|
| Legende: RK = Reißkraft, bestimmt nach DIN EN 12311-1 NAK = Nagelausreißkraft, bestimmt nach DIN EN 12310-1 RD = Reißdehnung MD = Maschinenrichtung CD = Querrichtung | | | | | | |

Aus den erhaltenen Spinnvliesen gemäß den Beispielen 1 und 2 werden nachfolgend erfindungsgemäße flächige Bahnen in Form von Verbundfolien hergestellt.

### 3. Herstellung von erfindungsgemäßen flächigen Bahnen (Verbundfolien):

### Vergleichsbeispiel 3 (nicht erfindungsgemäß):

Zwischen zwei Polypropylenvliesen (gem. den Beispielen 1 und 2), die eine Grammatur von etwa 60 g/m² und 30 g/m² aufweisen, wird eine mikroporöse Funktionsmembran mit einem Flächengewicht von 40 g/m², bestehend aus 50 Gew.% Polypropylen und 50 Gew.% Kreide, eingebettet und werden die Lagen mittels Ultraschallverschweißung miteinander verbunden.

### Beispiel 4 (nicht erfindungsgemäß):

Zwischen zwei Polypropylenvliesen (gem. den Beispielen 1 und 2), die eine Grammatur von etwa 60 g/m² und 30 g/m² aufweisen, wird in einem Extrusionsprozess eine Funktionsschicht mit ca. 20 g/m² TPU eingebettet. Als thermoplastisches Polyurethan ist aromatisches C4-Ether-TPU vorgesehen. Nach Extrusion werden die Lagen miteinander laminiert.

Vor Beschichtung der Vliese mit der Funktionsschicht bzw. vor Extrusion werden die Polypropylenvliese einer Corona-Vorbehandlung unterzogen. Anschließend wird mittels einer Breitschlitzdüse ein aufgeschmolzener, nicht-reaktiver Klebstoff (Hotmelt-Klebstoff) mit einem Beschichtungsgewicht von 5 bis 6 g/m² aufgebracht. Die Klebstoffschicht wird jeweils auf der Trägerschicht (Polypropylenvlies) angeordnet.

Dabei ist kein flächendeckender Auftrag der Klebstoffschicht vorgesehen. Bereichsweise weist die Oberfläche der Trägerschicht also Freiräume, die klebstofffrei sind, auf. Diese Freiräume werden durch die Breitschlitzdüse im kontinuierlichen Prozess bzw. bei kontinuierlicher Aufbringung des Klebstoffs durch "Aufreißen" hervorgerufen. Die Funktionsschicht wird gemäß dem vorgenannten Aufbau schließlich zwischen zwei Polypropylenvliesen verklebt.

### Beispiel 5 (nicht erfindungsgemäß):

Zwischen zwei Polypropylenvliesen (beide gem. Beispiel 2), die eine Grammatur von etwa 60 g/m² aufweisen, wird in einem Extrusionsprozess eine Funktionsschicht mit ca. 30 g/m² TPU eingebettet. Als thermoplastisches Polyurethan ist aromatisches C4-Ether-TPU vorgesehen. Nach Extrusion werden die Lagen miteinander laminiert.

Vor Beschichtung mit der Funktionsschicht bzw. vor Extrusion dieser werden die Polypropylenvliese einer Corona-Vorbehandlung unterzogen. Anschließend wird mittels einer Beschichtungswalze (Rasterwalze) ein aufgeschmolzener reaktiver Klebstoff (Polyurethan Hotmelt-Klebstoff) mit einem Beschichtungsgewicht von 6 g/m² aufgebracht. Die Klebstoffschicht wird jeweils auf der Trägerschicht (Polypropylenvlies) angeordnet.

Dabei ist kein flächendeckender Auftrag der Klebstoffschicht vorgesehen. Bereichsweise weist die Oberfläche der Trägerschicht daher Freiräume, die klebstofffrei sind, auf. Diese Freiräume werden durch die Gravur der Beschichtungswalze vorgegeben. Die Funktionsschicht entsprechend dem vorgenannten Aufbau somit zwischen zwei Polypropylenvliesen verklebt.

### Beispiel 6 (nicht erfindungsgemäß):

Zwischen zwei Polypropylenvliesen (beide gem. Beispiel 2), die eine Grammatur von etwa 60 g/m² aufweisen, wird in einem Extrusionsprozess eine Funktionsschicht mit ca. 25 g/m² TPU eingebettet. Als thermoplastisches Polyurethan ist aromatisches C4-Ether-TPU vorgesehen. Außerdem wird gleichzeitig ein Polypropylen-Drehergewebe mit einem Gewicht von 30 g/m² eingebettet. Nach Extrusion werden die Lagen miteinander laminiert.

Vor Beschichtung mit der Funktionsschicht bzw. vor Extrusion dieser werden die Polypropylenvliese im Prozess einer Corona-Vorbehandlung unterzogen und anschließend wird mittels einer Beschichtungswalze (Rasterwalze mit ca. 20 % Flächenbedeckung) ein aufgeschmolzener reaktiver Klebstoff (Polyurethan Hotmelt-Klebstoff) mit einem Beschichtungsgewicht von 12 g/m² aufgebracht. Die Klebstoffschicht wird jeweils auf der Trägerschicht (Polypropylenvlies) angeordnet.

Dabei ist kein flächendeckender Auftrag der Klebstoffschicht vorgesehen. Bereichsweise weist die Oberfläche der Trägerschicht also Freiräume, die klebstofffrei sind, auf. Diese Freiräume werden durch die Gravur der Beschichtungswalze vorgegeben. Die Funktionsschicht wird durch den vorgenannten Aufbau zwischen zwei Polypropylenvliesen verklebt.

### Beispiel 7 (nicht erfindungsgemäß)

Zwischen zwei Polypropylenvliesen (beide gem. Beispiel 2), die eine Grammatur von etwa 60 g/m² aufweisen, wird in einem Extrusionsprozess eine Funktionsschicht mit ca. 25 g/m² TPU eingebettet. Als thermoplastisches Polyurethan ist aromatischer C4-Ether-TPU vorgesehen. Außerdem wird gleichzeitig ein Gelege aus Polypropylen-Kreuzlaminat mit einem Flächengewicht von ca. 30 g/m² eingebettet.

Vor Beschichtung mit der Funktionsschicht bzw. vor Extrusion dieser werden die Polypropylenvliese einer Corona-Vorbehandlung unterzogen. Anschließend wird mittels einer Beschichtungswalze (Rasterwalze mit ca. 20 % Flächenbedeckung) ein aufgeschmolzener reaktiver Klebstoff (Polyurethan Hotmelt-Klebstoff) mit einem Beschichtungsgewicht von 8 g/m² aufgebracht. Die Klebstoffschicht wird jeweils auf der Trägerschicht (Polypropylenvlies) angeordnet.

Dabei ist kein flächendeckender Auftrag der Klebstoffschicht vorgesehen. Bereichsweise weist die Oberfläche der Trägerschicht also Freiräume, die klebstofffrei sind, auf. Diese Freiräume werden durch die Gravur der Beschichtungswalze vorgegeben. Die Funktionsschicht wird gemäß dem vorgenannten Aufbau zwischen zwei Polypropylenvliesen verklebt.

### 4. Physikalische und mechanische Eigenschaften der Bahnen:

Der s_{d}-Wert, welcher die Wasserdampfdurchlässigkeit angibt, wird nach DIN EN 12572 (Stand: Februar 2019) gemessen. Die Wasserdichtigkeit wird wie in DIN EN 13859-1-2010-11 beschrieben gemessen. Die dynamische Wassersäule wird nach gleichem Alterungsverfahren entsprechend DIN EN ISO 811-2018-08 gemessen. Die Alterung wird nach DIN EN 13859-1-2010-11 durchgeführt.

Es sind die nachfolgenden Versuchsergebnisse ermittelt worden:

**Tabelle 2: Physikalische Eigenschaften der Bahnen aus den Bsp. 3 bis 7**

| | | | Vor Alterung | | Nach Alterung | |
|---|---|---|---|---|---|---|
| | Flächengewicht [g/m²] | s_{d} - Wert [m] | Wasserdichtigkeit | Wassersäule [m] | Wasserdichtigkeit | Wassersäule [m] |
| Vgl.bsp. 3 | 130 | 0,053 | W1 | 4,4 | W1 | 4,3 |
| Bsp. 4¹ | 120 | 0,071 | W1 | 3,0 | W1 | 3,0 |
| Bsp. 5¹ | 170 | 0,092 | W1 | 6,4 | W1 | 6,3 |
| Bsp. 6¹ | 195 | 0,088 | W1 | 14,4 | W1 | 14,1 |
| Bsp. 7¹ | 190 | 0,082 | W1 | 15,0 | W1 | 14,8 |

| | | | | | | |
|---|---|---|---|---|---|---|
| ¹: nicht erfindungsgemäß | | | | | | |

Eine Wasserdichtigkeit entsprechend der Klasse W1 im Sinne der DIN EN 13859-1-2010-11 ist dabei zuzuordnen, wenn das Prüfobjekt, d.h. die zu prüfende Bahn, nach Verfahren Ader DIN EN 1928-2000-07 mit folgenden Abänderungen:
- Höhe der Wassersäule: 200 mm
- Färbung des Wassers mit 0,05 % Eosin
- Verwendung einer Lage Labor-Filterpapier (80 g/m²)
- Prüfdauer: 2 h (anstatt 24 h)
- Durchführung für drei Prüfkörper
wasserdicht ist, d.h. die Prüfung besteht.

Die mechanischen Eigenschaften der Bahnen bzw. Verbundfolien 3 bis 7 vor und nach Alterung entsprechend DIN EN 13859-1-2010-11 und sind in der folgenden Tabelle dargestellt:

**Tabelle 3: Mechanische Eigenschaften der Bahnen aus den Bsp. 3 bis 7**

| | Vor Alterung | | | | Nach Alterung | | | |
|---|---|---|---|---|---|---|---|---|
| | RK MD [N/ 5cm] | RK CD [N/ 5cm] | RD MD [%] | RD CD [%] | RK MD [N/ 5cm] | RK CD [N/ 5cm] | RD MD [%] | RD CD [%] |
| Vgl.bsp. 3 | 205 | 155 | 25 | 52 | 145 | 122 | 20 | 45 |
| Bsp. 4¹ | 220 | 160 | 35 | 67 | 204 | 149 | 37 | 71 |
| Bsp. 5¹ | 290 | 255 | 41 | 73 | 275 | 254 | 40 | 66 |
| Bsp. 6¹ | 475 | 465 | 15 | 16 | 462 | 468 | 14 | 13 |
| Bsp. 7¹ | 505 | 493 | 14 | 17 | 495 | 494 | 13 | 14 |

| | | | | | | | | |
|---|---|---|---|---|---|---|---|---|
| Legende: RK = Reißkraft RD = Reißdehnung MD = Maschinenrichtung CD = Querrichtung ¹ = nicht erfindungsgemäß | | | | | | | | |

### 5. Hydrolysestabilität der Bahnen:

Die dauerhafte Hydrolysestabilität der Bahnen bzw. Verbundfolien wird durch Lagerung von 15 x 15 cm großen Prüfkörpern in einem Klimaofen bei 70 °C und einer relativen Luftfeuchte von 90 % bestimmt. Nach 12 und 24 Wochen wird die Wasserdichtigkeit wie in DIN EN 13859-1-2010-11 beschrieben gemessen. Die dynamische Wassersäule wird nach gleichem Alterungsverfahren entsprechend DIN EN ISO 811-2018-08 gemessen.

Es sind die nachfolgenden Versuchsergebnisse ermittelt worden:

**Tabelle 4: Wasserdichtigkeit der Bahnen aus den Bsp. 3 bis 7 und Wassersäule nach Alterung bei 70 °C und 90 % rel. Luftfeuchte**

| | Wasserdichtigkeit | | Wassersäule [m] | |
|---|---|---|---|---|
| | 12 Wochen | 24 Wochen | 12 Wochen | 24 Wochen |
| Vgl.bsp. 3 | W1 | W1 | 4,3 | 4,2 |
| Bsp. 4¹ | W1 | W1 | 3,1 | 3,0 |
| Bsp. 5¹ | W1 | W1 | 6,3 | 6,1 |
| Bsp. 6¹ | W1 | W1 | 14,2 | 13,3 |
| Bsp. 7¹ | W1 | W1 | 14,7 | 14,6 |

| | | | | |
|---|---|---|---|---|
| ¹: nicht erfindungsgemäß | | | | |

### 6. Feucht- / Kalt-Stabilität der Bahnen:

Zur Bestimmung der Stabilität unter feuchten Bedingungen und niedrigen Temperaturen werden die Verbundfolien bzw. Bahnen nach den Beispielen 3 bis 7 einer Freibewitterung ohne Eindeckung in der Winterperiode über 3 Monate ausgesetzt (Nov. 2020 bis Jan. 2021 in Herdecke, Deutschland).

Nach 3 Monaten wird die Wasserdichtigkeit wie in DIN EN 13859-1-2010-11 beschrieben gemessen. Die dynamische Wassersäule wird nach der Freibewitterung entsprechend DIN EN ISO 811-2018-08 gemessen. Die Verbundhaftung der einzelnen Lagen zueinander wird ebenfalls bestimmt.

Es sind die nachfolgenden Versuchsergebnisse ermittelt worden:

**Tabelle 5: Wasserdichtigkeit der Bahnen aus den Bsp. 3 bis 7 und Wassersäule vor und nach der Winter-Freibewitterung**

| | Wasserdichtigkeit | | Wassersäule [m] | | Verbundhaftung | |
|---|---|---|---|---|---|---|
| | Start | 3 Monate | Start | 3 Monate | Start | 3 Monate |
| Vgl.bsp. 3 | W1 | W1 | 4,4 | 4,1 | + | + |
| Bsp. 4¹ | W1 | W1 | 3,0 | 2,1 | + | 0 |
| Bsp. 5¹ | W1 | W1 | 6,4 | 6,3 | ++ | ++ |
| Bsp. 6¹ | W1 | W1 | 14,4 | 14,1 | ++ | ++ |
| Bsp. 7¹ | W1 | W1 | 15,0 | 14,6 | ++ | ++ |

| | | | | | | |
|---|---|---|---|---|---|---|
| Legende: ++ = sehr gute Verbundhaftung + = gute Verbundhaftung 0 = befriedigende Verbundhaftung ¹ = nicht erfindungsgemäß | | | | | | |

### 7. Alterung der Bahnen bei 70 °C und 5 m/s Luftbewegung:

Die Alterungstests werden in einem Ofen entsprechend DIN EN 1296-2001-03 bei einer Temperatur von 70±2 °C mit einer konstanten Luftbewegung von 5±2 m/s durchgeführt. Die Luftaustauschrate liegt bei mindestens 10 Luftwechseln pro Stunde. Es werden 15 x 15 cm große Prüfkörper der Bahnen bzw. Verbundfolien in Aluminiumrahmen gespannt und vertikal im Ofen platziert. Dabei ist die Rückseite der Prüfkörper abgedeckt.

Nach 8, 16, 32, 48 und 64 Wochen werden Prüfkörper entnommen und die Wasserdichtigkeit, wie in DIN EN 13859-1-2010-11 beschrieben, bei einer Wassersäule von wenigstens 200 mm über einen Zeitraum von 2 h gemessen, jedoch entsprechend DIN EN ISO 811-2018-08 ohne Abdeckplatte und bei einer Fläche von 100 cm².

Es werden die Bahnen bzw. Verbundfolien aus den Beispielen 3 bis 7 getestet. Zusätzlich werden noch vier kommerziell erhältliche, häufig in der Praxis verwendete Vergleichsprodukte getestet. Dabei handelt es sich um folgende Bahnen:
- Produkt A: Braas Divoroll Pro (Hersteller: Braas-Monier)
- Produkt B: Isocell Omega Mono 200 Duo SK (Hersteller: Isocell)
- Produkt C: DELTA Vent N (Hersteller: Dörken)
- Produkt D: Koramic Profi 2S (Hersteller: Wienerberger)

**Tabelle 6: Wasserdichtigkeit der Bahnen aus den Bsp. 3 bis 7 und Wassersäule nach Alterung bei 70 °C und 5 m/s Luftbewegung (wobei n.b. = nicht bestanden)**

| | Wasserdichtigkeit | | | | | |
|---|---|---|---|---|---|---|
| | Start | 8 Wo. | 16 Wo. | 32 Wo. | 48 Wo. | 64 Wo. |
| A | W1 | W1 | n.b. | n.b. | n.b. | n.b. |
| B | W1 | W1 | W1 | n.b. | n.b. | n.b. |
| C | W1 | W1 | W1 | n.b. | n.b. | n.b. |
| D | W1 | W1 | W1 | n.b. | n.b. | n.b. |
| Vgl.bsp. 3 | W1 | W1 | W1 | n.b. | n.b. | n.b. |
| Bsp. 4¹ | W1 | W1 | W1 | W1 | W1 | W1 |
| Bsp. 5¹ | W1 | W1 | W1 | W1 | W1 | W1 |
| Bsp. 6¹ | W1 | W1 | W1 | W1 | W1 | W1 |
| Bsp. 7¹ | W1 | W1 | W1 | W1 | W1 | W1 |

| | Wassersäule [m] | | | | | |
|---|---|---|---|---|---|---|
| | Start | 8 Wo. | 16 Wo. | 32 Wo. | 48 Wo. | 64 Wo. |
| A | 5,0 | 0,4 | <0,2 | <0,2 | <0,2 | <0,2 |
| B | 2,3 | 1,0 | 0,7 | <0,2 | <0,2 | <0,2 |
| C | 4,5 | 4,3 | 4,4 | <0,2 | <0,2 | <0,2 |
| D | 14,1 | 9,9 | 6,5 | <0,2 | <0,2 | <0,2 |
| Vgl.bsp. 3 | 4,4 | 4,4 | 4,2 | <0,2 | <0,2 | <0,2 |
| Bsp. 4¹ | 3,0 | 3,1 | 3,2 | 3,3 | 3,2 | 2,9 |
| Bsp. 5¹ | 6,4 | 6,2 | 5,9 | 5,6 | 5,5 | 5,6 |
| Bsp. 6¹ | 14,4 | 14,4 | 14,1 | 13,9 | 13,2 | 12,9 |
| Bsp. 7¹ | 15,0 | 14,8 | 14,9 | 14,7 | 14,8 | 14,7 |

| | | | | | | |
|---|---|---|---|---|---|---|
| ¹: nicht erfindungsgemäß | | | | | | |

An Hand diese Versuchsergebnisse können die erfindungsgemäßen Vorteile von flächigen Bahnen bzw. Verbundfolien nach der vorliegenden Erfindung deutlich erkannt werden.

Insbesondere kann anhand der vorangehenden Ergebnisse eindrücklich erkannt werden, dass die beschriebenen Bahnen sich durch eine hohe Alterungsstabilität auszeichnen, durch welche sich die Bahnen insbesondere von ähnlich aufgebauten Bahnen des Standes der Technik deutlich abheben.

Speziell die Untersuchungen zur Alterungsstabilität nach dem erfindungsgemäßen Verfahren bzw. im Rahmen dessen, was für die beschriebenen Bahnen vorgesehen ist, zeigen eindrücklich, dass Bahnen aus dem Stand der Technik eine deutlich geringere Alterungsstabilität aufweisen als die beschriebenen Bahnen, insbesondere wenn der Aspekt der Luftbewegung berücksichtigt wird.

Wie bereits erwähnt wurde, wird der Faktor Luftbewegung bei gewöhnlichen bzw. im Rahmen von normativen Verfahren vernachlässigt. Anhand der obigen Ergebnisse kann jedoch deutlich erkannt werden, dass Luftbewegungen einen starken Einfluss auf den Zustand bzw. die die Beständigkeit einer Bahn haben können, so dass auch deren Inklusion in eine Simulation des Alterungsverhaltens der entsprechenden Bahn von Vorteil ist. Hier zeichnen sich die beschriebenen Bahnen durch eine deutlich höhere Alterungsstabilität aus als vergleichbare Bahnen aus dem Stand der Technik, welche unter den Testbedingungen vorzeitig versagen.

Insbesondere im Bereich, in dem die Langzeitstabilität der Bahnen simuliert und überprüft wird, zeigen die Vergleichsbahnen deutliche Schwächen, während die beschriebenen Bahnen weiterhin intakt und funktionsfähig sind, was insbesondere durch die weiterhin sehr gute Wasserdichtigkeit der Bahnen bestätigt ist.

Die vorteilhaften Eigenschaften erfindungsgemäßen Bahnen korrelieren dabei insbesondere mit dem Aufbau der Bahnen und/oder der Materialwahl sowohl für die Vliesschichten als auch die Membranschicht.

Neben der Materialwahl kann sich außerdem ein vergleichsweise höheres Flächengewicht sowohl der Vliesschicht als auch der Membranschicht positiv auf die Alterungsstabilität sowie auch die weiteren Eigenschaften der Bahn, bspw. die Hydrolysestabilität sowie die Feucht-Kalt-Stabilität, auswirken. Der Zusatz stützender Gewebe bzw. Gelege erlaubt schließlich die Bereitstellung ganz besonders stabiler und beständiger flächiger Bahnen, die gegenüber vergleichbaren Produkten aus dem Stand der Technik als vorteilhaft zu bewertende Eigenschaften aufweisen.

Weiterhin zeichnen sich die beschriebenen Bahnen außerdem durch eine hohe Hydrolysestabilität sowie Witterungsbeständigkeit, insbesondere auch während der Winter-Periode, aus. Die vorteilhaften Eigenschaften wirken sich insbesondere zusätzlich positive auf die Gesamthaltbarkeit und -widerstandsfähigkeit der Bahnen nach der vorliegenden Erfindung aus.

Flächige Bahnen, wie sie die vorliegende Erfindung bereitstellt, eignen sich, insbesondere im Hinblick auf die dargestellten vorteilhaften mechanischen und physikalischen Eigenschaften der Bahnen, vorzugsweise für die Verwendung im Baubereich, insbesondere als Unterspannbahn, Unterdeckbahn und/oder Schalungsbahn in einer Dachkonstruktion und/oder Fassadenbahn in einer Wandkonstruktion.

Speziell im Hinblick auf die Verwendung der erfindungsgemäßen flächigen Bahn in Dachkonstruktionen ist die hohe Alterungsstabilität der Bahnen auch in Gegenwart starker anhaltender Luftbewegung als klarer Vorteil gegenüber dem Stand der Technik hervorzuheben. Insbesondere in Dachkonstruktionen sind Luftbewegungen mit erhöhten Geschwindigkeiten gerade gewollt, um bspw. Feuchtigkeit sicher aus dem Gebäude- sowie Dachinneren abzuführen. Eine Unterdachbahn oder Unterdeckbahn, die in Gegenwart starker Luftbewegungen vorschnell altert, kann dementsprechend keinen hinreichend effizienten (Langzeit-) Schutz für die Dach- und/oder Gebäudekonstruktion bieten.

Mit der erfindungsgemäßen flächigen Bahn wird demgegenüber im Rahmen der vorliegenden Erfindung ein Erzeugnis bereitgestellt, das auch unter anspruchsvollsten Bedingungen zuverlässig und lange funktionsfähig bleibt.

### Bezugszeichenliste:

- 1: flächige Bahn
- 2: Membranschicht
- 3: erste Vliesschicht
- 4: zweite Vliesschicht
- 5: Membranschichtlage
- 6: weitere Membranschichtlage
- 7: Haftvermittlerschicht

- 8: Verstärkungsschicht
- 9: Monokomponentenfaser
- 10: Bikomponentenfaser
- 11: erste Komponente
- 12: zweite Komponente
- 13: Bahnunterseite
- 14: Bahnoberseite

## Patentansprüche

1. Hochalterungsstabile flächige Bahn für den Baubereich, aufweisend einen mehrschichtigen Aufbau umfassend mindestens eine erste Vliesschicht und eine zweite Vliesschicht sowie mindestens eine zwischen den Vliesschichten angeordnete Membranschicht, wobei die Membranschicht als monolithische Membranschicht ausgebildet ist und ein thermoplastisches Elastomer ausgewählt aus der Gruppe von thermoplastischen Polyurethanen und/oder thermoplastischen Copolyestern (TPEE) aufweist oder hieraus besteht, und wobei die erste und/oder die zweite Vliesschicht ein Flächengewicht zwischen 10 und 150 g/m² aufweist,
**dadurch gekennzeichnet,**
**dass** die erste Vliesschicht und die zweite Vliesschicht als Monokomponentenfaservlies ausgebildet sind,
**dass** zwischen der ersten Vliesschicht und der Membranschicht und der zweiten Vliesschicht und der Membranschicht eine Haftvermittlerschicht angeordnet ist, wobei die Haftvermittlerschicht durch einen reaktiven Polyurethan-Hotmelt-Klebstoff gebildet wird und mit einem Flächengewicht von 2 bis 20 g/m² aufgebracht ist, und
**dass** die Bahn eine Alterungsstabilität von mindestens 15 Jahren aufweist,
wobei die Alterungsstabilität bestimmt ist, indem die Bahn einem künstlichen Alterungsprozess unterzogen wird, wobei der künstliche Alterungsprozess bei einer Temperatur von 70±2 °C und einer Luftgeschwindigkeit von 5±2 m/s durchgeführt wird,
wobei die Zeitdauer in Wochen für die Durchführung des künstlichen Alterungsprozesses bestimmt ist, indem die Anzahl von Jahren für die Alterungsstabilität mit dem Faktor 12 multipliziert und das erhaltene Produkt durch einen Wert von 4,5 geteilt wird oder indem die Anzahl von Jahren für die Alterungsstabilität mit dem Faktor 2,5 multipliziert wird,
und wobei im Anschluss an den künstlichen Alterungsprozess die Wasserdichtigkeit der Bahn nach DIN EN 13859-1-2010-11, Abschnitt 5.2.3, gegenüber einer Wassersäule von wenigstens 200 mm über einen Zeitraum von 2 h geprüft wird.

2. Flächige Bahn nach Anspruch 1, **dadurch gekennzeichnet, dass** die Bahn eine Alterungsstabilität von mindestens 20 Jahren, insbesondere mindestens 25 Jahren, aufweist.

3. Flächige Bahn nach Anspruch 1 oder 2, **dadurch gekennzeichnet, dass** der künstliche Alterungsprozess zur Bestimmung der Alterungsstabilität über eine Dauer von mindestens 40 Wochen, bevorzugt mindestens 48 Wochen, besonders bevorzugt mindestens 64 Wochen, durchgeführt wird.

4. Flächige Bahn nach einem der vorangehenden Ansprüche, **dadurch gekennzeichnet, dass** die erste Vliesschicht und/oder die zweite Vliesschicht als Spinnvlies und/oder als Nadelvlies ausgebildet ist.

5. Flächige Bahn nach einem der vorangehenden Ansprüche, **dadurch gekennzeichnet, dass** die eine Faserkomponente ein oder mehrere Polymere enthält, insbesondere aus der Gruppe der thermoplastischen Kunststoffe, vorzugsweise aus der Gruppe der Polyolefine, Polyester, Polyamide und/oder thermoplastischen Polyurethane, vorzugsweise aus der Gruppe der Polyolefine, Polyester, und/oder thermoplastischen Polyurethane.

6. Flächige Bahn nach einem der vorangehenden Ansprüche, **dadurch gekennzeichnet, dass** die Membranschicht ein Flächengewicht im Bereich von 10 bis 150 g/m², insbesondere von 15 bis 100 g/m², vorzugsweise 18 bis 80 g/m², bevorzugt 20 bis 50 g/m², aufweist.

7. Flächige Bahn nach einem der vorangehenden Ansprüche, **dadurch gekennzeichnet, dass** die Membranschicht eine Schichtdicke im Bereich von 0,01 mm bis 2,5 cm, insbesondere 0,05 mm bis 1,5 cm, vorzugsweise 0,1 mm bis 1 cm, aufweist.

8. Flächige Bahn nach einem der vorangehenden Ansprüche, **dadurch gekennzeichnet, dass** die Haftvermittlerschicht mit einem Flächengewicht von 4 bis 15 g/m², vorzugsweise 5 bis 10 g/m², aufgebracht ist.

9. Flächige Bahn nach einem der vorangehenden Ansprüche, **dadurch gekennzeichnet, dass** die Bahn wasserdampfdurchlässig, diffusionsoffen, winddicht, regensicher und/oder wasserabweisend und/oder wasserdicht ausgebildet ist, insbesondere wobei die Bahn einen S_{d}-Wert gemessen nach DIN EN 12572, Stand Februar 2019, von kleiner oder gleich 0,5 m, insbesondere von 0,008 m bis 0,5 m, vorzugsweise von 0,009 m bis 0,2 m, bevorzugt von 0,01 m bis 0,1 m, aufweist.

10. Verwendung einer hochalterungsstabilen flächigen Bahn, insbesondere nach einem der vorangehenden Ansprüche 1 bis 9, im Baubereich, insbesondere als Unterspannbahn, Unterdeckbahn und/oder Schalungsbahn in einer Dachkonstruktion und/oder Fassadenbahn in einer Wandkonstruktion.

11. Verfahren zur Herstellung einer hochalterungsstabilen flächigen Bahn für den Baubereich gemäß einem der Ansprüche 1 bis 9 aufweisend einen mehrschichtigen Aufbau umfassend mindestens eine erste Vliesschicht und eine zweite Vliesschicht sowie mindestens eine zwischen den Vliesschichten angeordnete Membranschicht, wobei
die Bahn eine Alterungsstabilität von mindestens 15 Jahren aufweist,
**dadurch gekennzeichnet,**
**dass** die mindestens eine Membranschicht zwischen die mindestens erste und zweite Vliesschicht extrudiert wird, und die Membran- und Vliesschichten unmittelbar anschließend laminiert werden,
wobei Haftvermittlerschichten auf die Vliesschichten aufgebracht werden und wobei die Extrusion der Membranschicht dann auf die auf die Vliesschichten aufgebrachten Haftvermittlerschichten erfolgt.

## Claims

1. A highly ageing-resistant flat sheet for the construction sector, having a multilayer structure comprising at least a first nonwoven layer and a second nonwoven layer and at least one membrane layer arranged between the nonwoven layers, wherein the membrane layer is designed as a monolithic membrane layer and comprises a thermoplastic elastomer selected from the group of thermoplastic polyurethanes and/or thermoplastic copolyesters (TPEE), and wherein the first and/or the second nonwoven layer has a grammage of between 10 and 150 g/m²,
**characterized in that**
that the first nonwoven layer and the second nonwoven layer are designed as a mono-component fiber nonwoven,
**in that** an adhesion promoter layer is arranged between the first nonwoven layer and the membrane layer and the second nonwoven layer and the membrane layer, the adhesion promoter layer being formed by a reactive polyurethane hot-melt adhesive and being applied with a grammage of 2 to 20 g/m², and
that the sheet has an ageing stability of at least 15 years,
wherein the ageing stability is determined by subjecting the sheet to an artificial ageing process, the artificial ageing process being carried out at a temperature of 70±2 °C and an air velocity of 5±2 m/s,
where the duration in weeks for carrying out the artificial ageing process is determined by multiplying the number of years for the ageing stability by a factor of 12 and dividing the product obtained by a value of 4.5 or by multiplying the number of years for the ageing stability by a factor of 2.5,
and, following the artificial ageing process, the waterproofness of the membrane is tested in accordance with DIN EN 13859-1-2010-11, section 5.2.3, against a water column of at least 200 mm over a period of 2 hours.

2. Flat sheet according to claim 1, **characterized in that** the sheet has an ageing stability of at least 20 years, in particular at least 25 years.

3. Flat sheet according to claim 1 or 2, **characterized in that** the artificial ageing process for determining the ageing stability is carried out over a period of at least 40 weeks, preferably at least 48 weeks, particularly preferably at least 64 weeks.

4. Flat sheet according to one of the preceding claims, **characterized in that** the first nonwoven layer and/or the second nonwoven layer is formed as a spunbond and/or as a needlepunch nonwoven.

5. Flat sheet according to one of the preceding claims, **characterized in that** the one fibre component contains one or more polymers, in particular from the group of thermoplastics, preferably from the group of polyolefins, polyesters, polyamides and/or thermoplastic polyurethanes, preferably from the group of polyolefins, polyesters and/or thermoplastic polyurethanes.

6. Flat sheet according to one of the preceding claims, **characterized in that** the membrane layer has a grammage in the range from 10 to 150 g/m², in particular from 15 to 100 g/m², preferably from 18 to 80 g/m², preferably from 20 to 50 g/m².

7. Flat sheet according to one of the preceding claims, **characterized in that** the membrane layer has a layer thickness in the range from 0.01 mm to 2.5 cm, in particular 0.05 mm to 1.5 cm, preferably 0.1 mm to 1 cm.

8. Flat sheet according to one of the preceding claims, **characterized in that** the adhesion promoter layer is applied with a grammage of 4 to 15 g/m², preferably 5 to 10 g/m².

9. Flat sheet according to one of the preceding claims, **characterized in that** the sheet is permeable to water vapour, open to diffusion, windproof, rainproof and/or water-repellent and/or waterproof, in particular wherein the sheet has an S_{d} value measured according to DIN EN 12572, as of February 2019, of less than or equal to 0.5 m, in particular from 0.008 m to 0.5 m, preferably from 0.009 m to 0.2 m, preferably from 0.01 m to 0.1 m.

10. Use of a highly ageing-resistant flat sheet, in particular according to one of the preceding claims 1 to 9, in the building sector, in particular as underlayment sheet, sarking sheet and/or formwork sheet in a roof construction and/or façade sheet in a wall construction.

11. Method for producing a highly ageing-stable flat sheet for the construction sector according to one of claims 1 to 9, having a multilayer structure comprising at least a first nonwoven layer and a second nonwoven layer and at least one membrane layer arranged between the nonwoven layers, the sheet having an ageing stability of at least 15 years,
**characterized in that**
that the at least one membrane layer is extruded between the at least first and second nonwoven layers, and the membrane and nonwoven layers are laminated immediately afterwards,
whereby adhesion promoter layers are applied to the non-woven layers and whereby the extrusion of the membrane layer then takes place on the adhesion promoter layers applied to the non-woven layers.

## Revendications

1. Bande plane très stable au vieillissement pour le domaine de la construction, présentant une structure multicouche comprenant au moins une première couche de non-tissé et une deuxième couche de non-tissé ainsi qu'au moins une couche de membrane disposée entre les couches de non-tissé, la couche de membrane étant conçue comme une couche de membrane monolithique et présentant un élastomère thermoplastique choisi dans le groupe des polyuréthanes thermoplastiques et/ou des copolyesters thermoplastiques (TPEE) ou étant constituée de ceux-ci, et la première et/ou la deuxième couche de non-tissé présentant un poids par unité de surface compris entre 10 et 150 g/m² ,
**caractérisé en ce que**
**en ce que** la première couche de non-tissé et la deuxième couche de non-tissé sont réalisées sous forme de non-tissé en fibres monocomposant,
**en ce qu'**une couche d'agent adhésif est disposée entre la première couche de non-tissé et la couche de membrane et la deuxième couche de non-tissé et la couche de membrane, la couche d'agent adhésif étant formée par une colle hotmelt polyuré-thane réactive et étant appliquée avec un poids par unité de surface de 2 à 20 g/m² , et
que la bande présente une stabilité au vieillissement d'au moins 15 ans,
dans lequel la stabilité au vieillissement est déterminée en soumettant la bande à un processus de vieillissement artificiel, le processus de vieillissement artificiel étant effectué à une température de 70±2°C et à une vitesse d'air de 5±2 m/s,
la durée en semaines pour la réalisation du processus de vieillissement artificiel étant déterminée en multipliant le nombre d'années pour la stabilité au vieillissement par le facteur 12 et en divisant le produit obtenu par une valeur de 4,5 ou en multipliant le nombre d'années pour la stabilité au vieillissement par le facteur 2,5,
et dans lequel, à la suite du processus de vieillissement artificiel, l'étanchéité à l'eau du lé est testée selon la norme DIN EN 13859-1-2010-11, paragraphe 5.2.3, par rapport à une colonne d'eau d'au moins 200 mm pendant une durée de 2 heures.

2. Bande plane selon la revendication 1, **caractérisée en ce que** la nappe présente une stabilité au vieillissement d'au moins 20 ans, en particulier d'au moins 25 ans.

3. Bande plane selon la revendication 1 ou 2, **caractérisée en ce que** le processus de vieillissement artificiel pour déterminer la stabilité au vieillissement est réalisé sur une durée d'au moins 40 semaines, de préférence d'au moins 48 semaines, de manière particulièrement préférée d'au moins 64 semaines.

4. Bande plate selon l'une des revendications précédentes, **caractérisée en ce que** la première couche de non-tissé et/ou la deuxième couche de non-tissé est réalisée sous forme de non-tissé filé-lié et/ou de non-tissé aiguilleté.

5. Bande plate selon l'une des revendications précédentes, **caractérisée en ce que** l'un des composants fibreux contient un ou plusieurs polymères, en particulier du groupe des matières thermoplastiques, de préférence du groupe des polyoléfines, des polyesters, des polyamides et/ou des polyuréthanes thermoplastiques, de préférence du groupe des polyoléfines, des polyesters, et/ou des polyuréthanes thermoplastiques.

6. Bande plate selon l'une des revendications précédentes, **caractérisée en ce que** la couche de membrane présente un poids surfacique dans la plage de 10 à 150 g/m², en particulier de 15 à 100 g/m² , de préférence de 18 à 80 g/m², de préférence de 20 à 50 g/m².

7. Bande plane selon l'une des revendications précédentes, **caractérisée en ce que** la couche de membrane présente une épaisseur de couche dans la plage de 0,01 mm à 2,5 cm, en particulier de 0,05 mm à 1,5 cm, de préférence de 0,1 mm à 1 cm.

8. Bande plane selon l'une des revendications précédentes, **caractérisée en ce que** la couche d'adhérence est appliquée avec un poids surfacique de 4 à 15 g/m² , de préférence de 5 à 10 g/m² .

9. Bande plate selon l'une des revendications précédentes, **caractérisée en ce que** la bande est perméable à la vapeur d'eau, ouverte à la diffusion, étanche au vent, étanche à la pluie et/ou hydrofuge et/ou étanche à l'eau, en particulier la bande présentant une valeur S_{d} mesurée selon DIN EN 12572, état février 2019, inférieure ou égale à 0,5 m, en particulier de 0,008 m à 0,5 m, de préférence de 0,009 m à 0,2 m, de préférence de 0,01 m à 0,1 m.

10. Utilisation d'une bande plane très stable au vieillissement, en particulier selon l'une des revendications 1 à 9 précédentes, dans le domaine de la construction, en particulier comme bande de sous-tension, bande de sous-couverture et/ou bande de coffrage dans une construction de toit et/ou bande de façade dans une construction de mur.

11. Procédé de fabrication d'une bande plane à haute stabilité au vieillissement pour le domaine de la construction selon l'une des revendications 1 à 9, présentant une structure multicouche comprenant au moins une première couche de non-tissé et une deuxième couche de non-tissé ainsi qu'au moins une couche de membrane disposée entre les couches de non-tissé, la bande présentant une stabilité au vieillissement d'au moins 15 ans,
**caractérisé en ce que**
**en ce que** la au moins une couche de membrane est extrudée entre la au moins première et la au moins deuxième couche de non-tissé, et les couches de membrane et de non-tissé sont laminées immédiatement après,
des couches d'agent adhésif étant appliquées sur les couches de non-tissé et l'extrusion de la couche de membrane étant ensuite effectuée sur les couches d'agent adhésif appliquées sur les couches de non-tissé.
